# EUROPEAN PATENT SPECIFICATION

(11) **EP 3 402 239 B1**
(45) Date of publication and mention of the grant of the patent: **20.07.2022**
(21) Application number: 16885594.8
(22) Date of filing: 20.01.2016
(51) Int. Cl.: H04W 72/04, H04W 72/10

(54) **INFORMATION TRANSMISSION METHOD, APPARATUS AND SYSTEM IN ELECTRIC POWER COMMUNICATION SYSTEM**
INFORMATIONSÜBERTRAGUNGSVERFAHREN, VORRICHTUNG UND SYSTEM IN EINEM STROMKOMMUNIKATIONSSYSTEM
PROCÉDÉ, APPAREIL, ET SYSTÈME DE TRANSMISSION D'INFORMATIONS DANS UN SYSTÈME DE COMMUNICATION D'ÉNERGIE ÉLECTRIQUE

(43) Date of publication of application: 14.11.2018
(73) Proprietor: Huawei Technologies Co., Ltd., Longgang District Shenzhen, Guangdong 518129 (CN)
(72) Inventor: LIU, Yalin, Shenzhen Guangdong 518129 (CN); YANG, Ganghua, Shenzhen Guangdong 518129 (CN); ZHANG, Jun, Shenzhen Guangdong 518129 (CN); QIAN, Xiangjiang, Shenzhen Guangdong 518129 (CN)
(74) Representative: Epping - Hermann - Fischer
(86) International application number: PCT/CN2016/071444
(87) International publication number: WO 2017/124321

(56) References cited:
- WO-A1-2015/094751
- WO-A1-2015/113226
- WO-A1-2015/172740
- CN-A- 104 796 934
- US-A1- 2014 269 550
- US-A1- 2015 305 037
- US-B2- 7 400 903
- YU RONG ET AL: "Hybrid Spectrum Access in Cognitive-Radio-Based Smart-Grid Communications Systems", IEEE SYSTEMS JOURNAL, IEEE, US, vol. 8, no. 2, 1 June 2014 (2014-06-01), pages 577-587, XP011549092, ISSN: 1932-8184, DOI: 10.1109/JSYST.2013.2260931 [retrieved on 2014-05-22]

## Description

### TECHNICAL FIELD

The present invention relates to the communications field, and more specifically, to a method and an apparatus for transmitting information in a power communications system, and a system.

### BACKGROUND

Wireless communication is one of main communications means in power communication and is widely applied to power networks, and particularly to a smart grid. Currently, a power communications system usually uses a dedicated licensed frequency band for communication. For example, a 1-MHz dedicated frequency band on a 230 MHz frequency band is available for a power communications system in China. The dedicated licensed channel for the power communications system features a low frequency, a long wavelength, and a wide coverage area; however, it also has a disadvantage of relatively small bandwidth.

Different types of information in the power communications system have different features during transmission. For example, control information has a relatively high requirement on real-time transmission, while metering data occupies a great amount of bandwidth due to a high data throughput. Therefore, the existing dedicated licensed channel cannot desirably meet a communication requirement for different types of information. This affects wireless communication performance of the power communications system.

From US 7,400,903 B2 wireless communications systems using two frequency bands are known. From the contribution "Hybrid Spectrum Access in Cognitive-Radio-Based Smart-Grid Communications Systems" (Yu Rong et al.; IEEE Systems Journal; IEEE, US; vol. 8; no. 2; June 1, 2014; pages 577-587) smart grid networks for power grids are known. From WO 2015/094751 A1 wireless networks with limited licensed channel usage are known. From US 2015/305037 A1 data transmission over an unlicensed RF band is known.

### SUMMARY

A method for transmitting information in a power communications system and an apparatus for transmitting information in a power communications system according to the independent claims are provided. Dependent claims provide preferred embodiments.

### BRIEF DESCRIPTION OF DRAWINGS

To describe the technical solutions in the example more clearly, the following briefly describes the accompanying drawings required for describing the example. Apparently, the accompanying drawings in the following description show merely some example, and a person of ordinary skill in the art may still derive other drawings from these accompanying drawings without creative efforts.
FIG. 1 is a schematic diagram of a communications system to which a method for transmitting information according to an example is applicable;
FIG. 2 is a schematic block diagram of a sensor according to an example;
FIG. 3 is a schematic flowchart of a method for transmitting information in a power communications system according to an example;
FIG. 4 is another schematic flowchart of a method for transmitting information in a power communications system according to an example;
FIG. 5 is a schematic block diagram of an apparatus for transmitting information in a power communications system according to an example;
FIG. 6 is another schematic block diagram of an apparatus for transmitting information in a power communications system according to an example;
FIG. 7 is a schematic block diagram of a device for transmitting information in a power communications system according to an example;
FIG. 8 is another schematic block diagram of a device for transmitting information in a power communications system according to an example;
FIG. 9 is a schematic block diagram of a power communications system according to an example; and
FIG. 10 is another schematic block diagram of a power communications system according to an example.

### DESCRIPTION OF EMBODIMENTS

The following clearly and completely describes the technical solutions in the example with reference to the accompanying drawings in the example. Apparently, the described embodiments are some but not all of the example. All other embodiments obtained by a person of ordinary skill in the art based on the example without creative efforts shall fall within the protection scope of the present invention.

It should be understood that a power communications system in the example may use various wireless communication solutions for communication, such as a Global System for Mobile Communications (GSM, Global System for Mobile Communications), a Code Division Multiple Access (CDMA, Code Division Multiple Access) system, a Wideband Code Division Multiple Access (WCDMA, Wideband Code Division Multiple Access Wireless) system, a general packet radio service (GPRS, General Packet Radio Service) system, a Long Term Evolution (LTE, Long Term Evolution) system, and a wireless local area network (WLAN, Wireless Local Area Network).

It should be further understood that in the example, a transmit end device or a receive end device may be a terminal device of the power communications system, the terminal device may communicate with one or more network side devices by using a radio access network (RAN, Radio Access Network), and the terminal device may include an electric brake, a sensor, or a smart meter.

It should be further understood that in the example, the transmit end device or the receive end device may be a network side device of the power communications system, the network side device may be configured to communicate with a terminal device, and the network device may be a base transceiver station (BTS, Base Transceiver Station) in a GSM system or in a CDMA system, may be a NodeB (Node B) in a WCDMA system, or may be an evolved NodeB (eNB, Evolved Node B) in an LTE system. Alternatively, the network side device may be a relay node, an access point, an in-vehicle device, a wearable device, a base station device on a future 5G network, or the like.

According to a method, an apparatus and a device for transmitting data in a power communications system in the example, at least two frequency bands may be used for wireless communication, and frequency band licensing statuses of the at least two frequency bands are different. Specifically, the at least two frequency bands include at least two of a dedicated licensed frequency band (or referred to as "a dedicated frequency band"), an unlicensed frequency band, and a non-dedicated licensed frequency band that are used by the power communications system. That is, the at least two frequency bands may include the dedicated licensed frequency band and the unlicensed frequency band, or may include the dedicated licensed frequency band and the non-dedicated licensed frequency band, or may include the unlicensed frequency band and the non-dedicated licensed frequency band, or may include the dedicated licensed frequency band, the unlicensed frequency band, and the non-dedicated licensed frequency band.

The dedicated licensed frequency band for the power communications system is granted only for the power industry, and a device does not need to apply for a grant or contend for a channel when the device uses the frequency band. Therefore, the dedicated licensed frequency band has a relatively reliable information transmission capability and can be used to transmit information that requires relatively high QoS or reliability. The unlicensed frequency band is available for all industries, bandwidth of the frequency band is relatively large, and a device does not need to apply for a grant when the device uses the frequency band. However, the frequency band is interference-prone, and the device needs to contend for a channel when the device uses the frequency band. Therefore, the unlicensed frequency band is suitable for transmitting information that is of a great volume and that requires relatively low reliability or QoS. The non-dedicated licensed frequency band has relatively large bandwidth and a relatively high reliability, and a device does not need to contend for a channel when the device uses the frequency band. However, the frequency band is allocated for different industries in different regions. Therefore, the non-dedicated licensed frequency band is suitable for transmitting information that requires reliability and that is transmitted only in a local area instead of across a country.

A target frequency band in the example is a to-be-used frequency band that is determined from the at least two frequency bands by the power communications system.

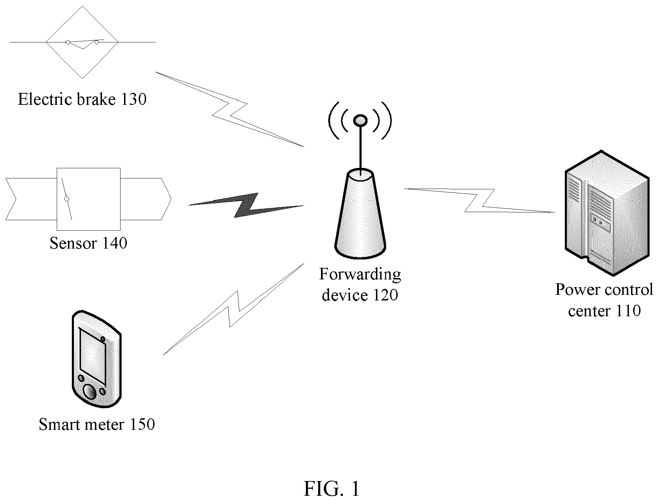

FIG. 1 is a schematic diagram applicable to a method for transmitting information in a power communications system according to an example. It should be noted that an example in FIG. 1 is only to help a person skilled in the art to better understand this example instead of limiting the scope of this example. For example, in FIG. 1, an electric brake 130, a sensor 140, and a smart meter 150 are all power terminal devices, and a forwarding device 120 and a power control center 110 are network side devices. FIG. 1 shows one electric brake, one sensor, one smart meter, one forwarding device, and one electric control center, but a quantity of power terminal devices and a quantity of network side devices may alternatively be other quantities, and this is not limited in this example. To be specific, this example may include only one power terminal device and one network side device, or may include one power terminal device and a plurality of network side devices, or may include a plurality of power terminal devices and one network side device, or may include a plurality of power terminal devices and a plurality of network side devices.

It should be understood that this example may include one type of power terminal device and one type of network side device, or may include one type of power terminal device and a plurality of types of network side devices, or may include a plurality of types of power terminal devices and one type of network side device, or may include a plurality of types of power terminal devices and a plurality of types of network side devices.

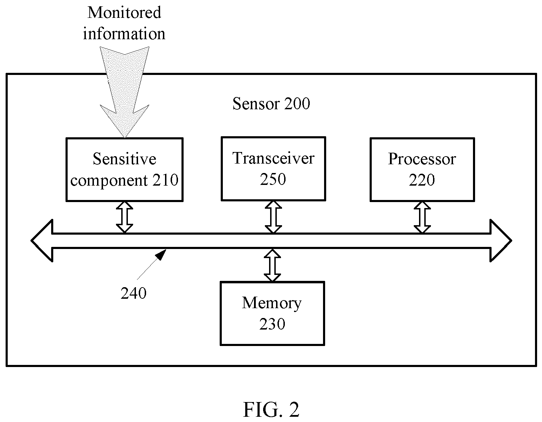

It should be further understood that a power terminal device may send information to a network side device by using different frequency bands, and receive, by using different frequency bands, information sent by the network side device. As shown in FIG. 2, FIG. 2 shows a sensor 200 that can receive or send information as an example. The sensor 200 includes a sensitive component 210, a processor 220, a memory 230, a bus system 240, and a transceiver 250. The sensitive component 210, the processor 220, the memory 230, and the transceiver 250 are connected by using the bus system 240. The sensitive component 210 directly senses measured information, such as temperature information, and converts the measured information into an electrical signal. The memory 230 is configured to store an instruction, and the processor 220 is configured to execute the instruction stored in the memory 230, so as to control the transceiver to receive or send a signal.

In a power communications system, an electric brake is a control-type terminal, and both open and close of the electric brake are controlled by control information sent by the system; the sensor is a monitoring-type terminal and can monitor information such as a cable temperature and current intensity; and data recorded by a smart meter is metering-type information. Therefore, information transmitted in the power communications system may include control-type information, monitoring-type information, and metering-type information.

Currently, the following frequency bands are available for a power communications system in some countries. (1) Dedicated licensed frequency band (for example, a 230 MHz frequency band): A 1-MHz-wide dedicated frequency band is available for the power communications system on the frequency band. However, the 1-MHz-wide dedicated frequency band is not a continuous spectrum but a series of discrete frequencies, and a special spectrum aggregation technology needs to be used to utilize the 1-MHz-wide dedicated frequency band. As shown in Table 1 and Table 2, bandwidth of each discrete frequency is 25 KHz, and there are 40 frequency channel numbers in total, that is, 1 MHz bandwidth in total. The frequency band has advantages of a low frequency, a long wavelength, and a wide coverage area. (2) Non-dedicated licensed frequency band (for example, a 1.8 GHz frequency band): The frequency band is entirely available for various industries and is not dedicated for the power communications system. Currently, the frequency band has been applied to power, airport, shipping, railway, road transportation, and subway in various cities. The frequency band has an advantage of large bandwidth that may be as large as 20 MHz (1785 MHz to 1805 MHz). (3) Unlicensed frequency band, such as a 2.4 GHz frequency band or a 5 GHz frequency band: The frequency band has an advantage of large bandwidth that may be as large as 80 MHz, or even 160 MHz. However, disadvantages are that the frequency band is unreliable because there is interference on the frequency band, and that a transmit end device is not necessarily able to obtain a channel through contention and information transmission may be delayed because the channel is shared.

**Table 1 Dedicated frequencies for power (1)**

| **Item** | **Frequency Group** | **Frequency Number** | **Transmit Frequency (MHz)** |
|---|---|---|---|
| S ingle- frequency networking | F1 | F1-3 | 228.075 |
| | | F1-5 | 228.125 |
| | | F1-7 | 228.175 |
| | | F1-10 | 228.250 |
| | | F1-13 | 228.325 |
| | | F1-16 | 228.400 |
| | | F1-19 | 228.475 |
| | | F1-22 | 228.550 |
| | | FI-27 | 228.675 |
| | | F1-30 | 228.750 |

**Table 2 Dedicated frequencies for power (2)**

| **Item** | **Frequency Group** | **Frequency Number** | **Transmit Frequency (MHz)** | |
|---|---|---|---|---|
| | | | **Primary station** | **Secondary station** |
| dual-frequency networking | F3 | F3-21 | 230.525 | 233.525 |
| | | F3-27 | 230.675 | 233.675 |
| | | F3-29 | 230.725 | 233.725 |
| | | F3-34 | 230.850 | 233.850 |
| | | F3-38 | 230.950 | 233.950 |
| | | F3-41 | 231.025 | 234.025 |
| | | F3-45 | 231.125 | 234.125 |
| | | F3-47 | 231.175 | 234.175 |
| | | F3-49 | 231.225 | 234.225 |
| | F4 | F4-3 | 231.325 | 224.325 |
| | | F4-7 | 231.425 | 224.425 |
| | | F4-9 | 231.475 | 224.475 |
| | | F4-11 | 231.525 | 224.525 |
| | | F4-13 | 231.575 | 224.575 |
| | | F4-16 | 231.650 | 224.650 |

Specifically, for monitoring-type information collected by the sensor, a data packet may be generated based on an LTE-A (LTE-Advanced, Long Term Evolution-Advanced) frame format, and is sent to a base station by using the 230 MHz frequency band or the 1.8 GHz frequency band; or a data packet may be generated based on a frame format in the IEEE (Institute of Electrical and Electronics Engineers, Institute of Electrical and Electronics Engineers) 802.11ac standard, and is sent to an access point by using the 2.4 GHz frequency band and/or the 5 GHz frequency band. After collecting metering-type information, the smart meter may generate a data packet based on the frame format in the IEEE 802.11ac standard and send the data packet to the access point by using the 2.4 GHz frequency band and/or the 5 GHz frequency band, or may generate a data packet based on the LTE-A frame format and send the data packet to the base station by using the 1.8 GHz frequency band.

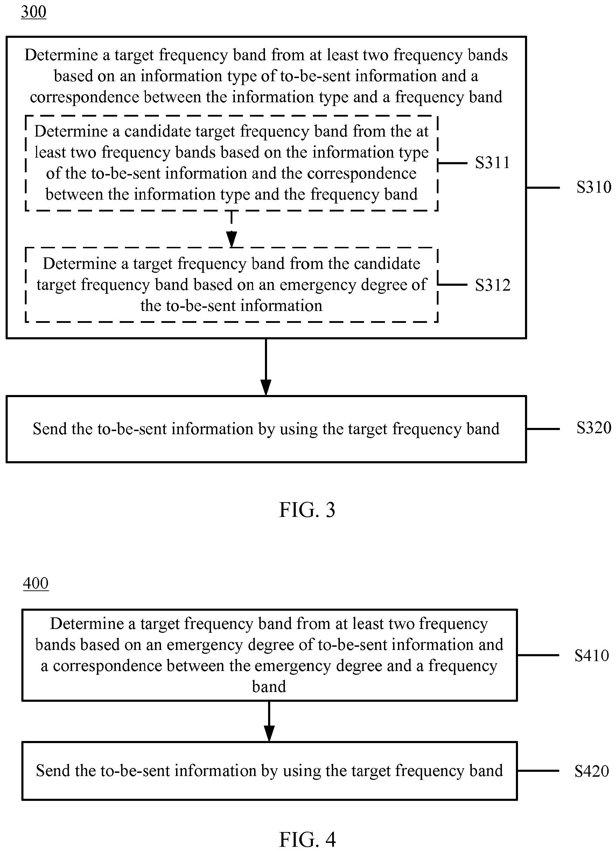

Correspondingly, the electric brake may receive, by using the 230 MHz frequency band, information sent by the base station. The sensor may receive, by using the 230 MHz frequency band or the 1.8 GHz frequency band, information sent by the base station, and may also receive, by using the 2.4 GHz frequency band and/or the 5 GHz frequency band, information sent by the access point. The smart meter may receive, by using the 2.4 GHz frequency band and/or the 5 GHz frequency band, information sent by the access point, and may also receive, by using the 1.8 GHz frequency band, information sent by the base station. FIG. 3 is a schematic flowchart of a method for transmitting information in a power communications system according to an example. The method shown in FIG. 3 may be performed by a transmit end device, and the transmit end device may be the electric brake 130, the sensor 140, or the smart meter 150 in FIG. 1, may be the power control center 110 in FIG. 1, or may be the forwarding device 120 in FIG. 1. As shown in FIG. 3, the method 300 includes the following steps.

S310. Determine a target frequency band from at least two frequency bands based on an information type of to-be-sent information and a correspondence between the information type and a frequency band.

S320. Send the to-be-sent information by using the target frequency band.

In step S310, specifically, the transmit end device first needs to determine an available frequency band, and after obtaining the to-be-sent information, the transmit end device determines, based on the information type of the to-be-sent information, the frequency band for sending the to-be-sent information. In this example, the transmit end device may be a terminal device (that is, case 1), or may be a network side device (that is, case 2). The following separately describes the foregoing two cases.

### Case 1

Optionally, that the terminal device determines, based on the information type of the to-be-sent information, the frequency band for sending the to-be-sent information includes:
if the to-be-sent information is monitoring-type information, the terminal device may determine to use a dedicated licensed frequency band, a non-dedicated licensed frequency band, or an unlicensed frequency band of a communications system to send the to-be-sent information, where specifically, when the power communications system determines that currently available frequency bands are a 230 MHz frequency band and a 2.4 GHz frequency band, since a sensor is a monitoring-type terminal device and cable temperature information collected by the sensor is monitoring-type information, the sensor may determine to use the 230 MHz frequency band to send the information, or determine to use the 2.4 GHz frequency band to send the information, or determine not to send the information; and optionally, if the power communications system further successfully applies for permission to use a 1.8 GHz frequency band, the sensor may alternatively determine to use the 1.8 GHz frequency band to send the monitoring-type information; or
if the to-be-sent information is metering-type information, the terminal device may determine to use a non-dedicated licensed frequency band or an unlicensed frequency band of a communications system to send the to-be-sent information, where specifically, when the power communications system determines that currently available frequency bands are a 230 MHz frequency band and a 2.4 GHz frequency band, since a smart meter is a metering-type terminal device and user power usage readings information collected by the smart meter is metering-type information, the smart meter may determine to use the 2.4 GHz frequency band to send the information; and if the power communications system further successfully applies for permission to use a 1.8 GHz frequency band, the smart meter may alternatively determine to use the 1.8 GHz frequency band to send the user power usage readings information.

Correspondingly, a receive end device may detect a signal on a corresponding frequency band according to a rule that is agreed upon in advance, so as to prepare for receiving the information sent by the terminal device.

It should be understood that the foregoing embodiment is merely an example for description, and this example is not limited thereto. For example, information collected by the sensor may alternatively be current intensity information. The specific frequency bands listed above are also merely used for ease of understanding. Any method that can be used to determine a target frequency band from at least two frequency bands based on an information type of to-be-sent information and a correspondence between the information type and a frequency band shall fall within the protection scope of the present invention.

### Case 2

Optionally, that the network side device determines, based on the information type of the to-be-sent information, the frequency band for sending the to-be-sent information includes:
when the network side device is a control type device in a power communications network, the network side device may send control-type information to another device, and the network device may determine to use a dedicated licensed frequency band in a communications system to send the to-be-sent information. For example, when the network side device is a control center of the power communications system, the power communications system determines that currently available frequency bands are a 230 MHz frequency band and a 2.4 GHz frequency band. When the control center is about to send, to an electric brake, information instructing to close the brake, since the information is control-type information, the control center may determine to use the 230 MHz frequency band to send the information, and the information may be forwarded by a base station or may be sent by a data radio station.

In addition, the network side device may also be a forwarding type device, and may receive information sent by another device and forward the information to a corresponding device. In this case, the network side device may determine a target frequency band based on an information type of the received information and a correspondence between the information type and a frequency band. Specifically, a base station may receive information that is sent by a power control center and that is used to command a smart meter to upload power usage readings. Because the information is control-type information, the base station may determine to use the 230 MHz frequency band to send the information to the smart meter. Alternatively, an access point may receive the information and determine to use the 2.4 GHz frequency band to forward the information. Alternatively, a base station or an access point may receive cable temperature information or current intensity information sent by a sensor, and forward the information to the control center by using the 230 MHz frequency band or the 2.4 GHz frequency band.

Correspondingly, a receive end device may detect a signal on a corresponding frequency band according to a rule that is agreed upon in advance, so as to prepare for receiving the information sent by the network side device.

In step S320, specifically, after determining the target frequency band for the to-be-sent information, the transmit end device generates a data packet in a corresponding format based on a type of a network used by the target frequency band, and sends the to-be-sent information.

For example, if the transmit end device determines to use the 230 MHz frequency band to send information, a data packet may be generated based on an LTE-A frame format, or a data packet may be generated based on a frame format of another cellular network, or a corresponding data packet may be generated based on a data format of a data radio station. If the terminal device determines to use the 2.4 GHz frequency band to send information, a data packet may be generated based on a frame format in the IEEE 802.11ac standard. If the system further successfully applies for permission to use the 1.8 GHz frequency band and the 1.8 GHz frequency band is determined to be used to send information, a data packet may be generated based on the LTE-A frame format, or a corresponding data packet may be generated based on another network supported by the 1.8 GHz frequency band.

It should be understood that the foregoing embodiment is merely an example for description, and this example is not limited thereto. Any power communications network that allows information to be transmitted by using at least two frequency bands and that can adapt a frequency band licensing status of a selected target frequency band to an information type of to-be-sent information shall fall within the protection scope of the present invention. Therefore, according to the method for transmitting information in a power communications system provided in this example, the target frequency band is determined from the at least two frequency bands based on the information type of the to-be-sent information, and the to-be-sent information is sent by using the target frequency band, so that a frequency band licensing status of the selected target frequency band can be adapted to the information type of the to-be-sent information, transmission requirements of information of different information types can be flexibly met, and performance of the power communications system is improved.

Optionally, when the target frequency band is determined from the at least two frequency bands, the target frequency band may further be determined based on an emergency degree of the to-be-sent information. The determining a target frequency band from at least two frequency bands in the method 300 specifically includes the following steps.

S311. Determine a candidate target frequency band from the at least two frequency bands based on the information type of the to-be-sent information and the correspondence between the information type and the frequency band.

S312. Determine a target frequency band from the candidate target frequency band based on an emergency degree of the to-be-sent information.

For example, the power communications system determines that information collected by a power sensor is monitoring-type information; therefore, at least two of the dedicated licensed frequency band, the non-dedicated licensed frequency band, and the unlicensed frequency band may be determined as candidate target frequency bands. If the power sensor collects information indicating that a cable temperature is the same as an ambient temperature, the power communications system may determine that the information is information of a relatively low emergency degree, and may further determine the unlicensed frequency band as a target frequency band for the information. If the power sensor collects information indicating that a cable temperature is 5 degrees Celsius higher than an ambient temperature, the power communications system may determine that the information is information of a relatively high emergency degree, and may further determine a licensed frequency band as a target frequency band for the information.

For another example, the power communications system determines that information sent by a power control center is control-type information; therefore, the dedicated licensed frequency band and the non-dedicated licensed frequency band may be determined as candidate target frequency bands. If the power control center sends, to an electric brake, information instructing to open the electric brake, the power communications system may determine that the information is information of a relatively high emergency degree, and may further determine the dedicated licensed frequency band as a target frequency band for the information. If the power control center sends, to the smart meter, information instructing to report power usage readings, the power communications system may determine that the information is information of a relatively low emergency degree, and may further determine the non-dedicated licensed frequency band as a target frequency band for the information.

It should be understood that the foregoing embodiment is merely an example for description, and this example is not limited thereto. Any power communications network that allows information to be transmitted by using at least two frequency bands and that can adapt a frequency band licensing status of a selected target frequency band to an emergency degree of to-be-sent information shall fall within the protection scope of the present invention. Therefore, according to the method for transmitting information in a power communications system provided in this example, the target frequency band may be determined based on the emergency degree of the to-be-sent information, so that transmission requirements of information of different emergency degrees can be met, and performance of the power communications system is improved.

Optionally, the at least two frequency bands used by the power communications system in the method 300 include at least two of the dedicated licensed frequency band, the non-dedicated licensed frequency band, and the unlicensed frequency band.

Optionally, the information type of the to-be-transmitted information in the method 300 includes a control type, a monitoring type, or a metering type.

Optionally, the determining a target frequency band from at least two frequency bands based on an information type of to-be-sent information and a correspondence between the information type and a frequency band in the method 300 specifically includes the following steps.

S313. Determine the dedicated licensed frequency band as the target frequency band for the to-be-sent information if the information type of the to-be-sent information is the control type. S314. Determine the dedicated licensed frequency band, the unlicensed frequency band, or the non-dedicated licensed frequency band as the target frequency band for the to-be-sent information if the information type of the to-be-sent information is the monitoring type.

S315. Determine the unlicensed frequency band or the non-dedicated licensed frequency band as the target frequency band for the to-be-sent information if the information type of the to-be-sent information is the metering type.

Specifically, if the to-be-sent information is information sent by the control center to the electric brake, such as information instructing to open the electric brake, the power communications system may determine that the information is control-type information, so as to determine the dedicated licensed frequency band as a target frequency band for the information based on that the control-type information requires relatively high QoS or transmission reliability and that the dedicated licensed frequency band features relatively high reliability. If the to-be-sent information is information sent by the power sensor to the control center, such as cable temperature information, the power communications system may determine that the information is monitoring-type information, so as to determine the dedicated licensed frequency band, the unlicensed frequency band, or the non-dedicated licensed frequency band as a target frequency band for the information based on a specific case that the monitoring-type information requires ordinary QoS or transmission reliability. If the to-be-sent information is information sent by the smart meter to the control center, such as user power usage readings information, the power communications system may determine that the information is metering-type information, so as to determine the unlicensed frequency band or the non-dedicated licensed frequency band as a target frequency band for the information based on that the metering-type information requires relatively low QoS or transmission reliability but relatively large bandwidth and that the unlicensed frequency band or the non-dedicated licensed frequency band features relatively low reliability but relatively large bandwidth.

It should be understood that the foregoing embodiment is merely an example for description, and this example is not limited thereto. For example, the control-type information may further be information used by the control center to command the sensor to change a monitoring period. Any method that can be used to determine, in a power communications system, a target frequency band based on an information type of to-be-sent information and a correspondence between the information type and a transmission feature of a frequency band shall fall within the protection scope of the present invention.

Optionally, in the method 300, the determining a dedicated licensed frequency band, an unlicensed frequency band, or a non-dedicated licensed frequency band as the target frequency band for the to-be-sent information if the information type of the to-be-sent information is a monitoring type specifically includes the following steps.

S316. Determine the unlicensed frequency band as the target frequency band for the to-be-sent information if the information type of the to-be-sent information is the monitoring type and the emergency degree of the to-be-sent information meets a first preset condition. S317. Determine the non-dedicated licensed frequency band as the target frequency band for the to-be-sent information if the information type of the to-be-sent information is the monitoring type and the emergency degree of the to-be-sent information meets a second preset condition.

S318. Determine the dedicated licensed frequency band as the target frequency band for the to-be-sent information if the information type of the to-be-sent information is the monitoring type and the emergency degree of the to-be-sent information meets a third preset condition. An emergency degree corresponding to the third preset condition is higher than an emergency degree corresponding to the first preset condition and an emergency degree corresponding to the second preset condition.

Information content of the to-be-sent information may be different; therefore, to-be-sent information of a same information type may have different emergency degrees in the power communications system, and an emergency degree of the information may be determined based on a preset condition.

For example, when the monitoring-type information is a difference between a cable temperature and an ambient temperature, the preset condition may be as follows: If information collected by a terminal device includes that the temperature difference between the cable temperature and the ambient temperature is less than 3 degrees Celsius, it may be considered that an emergency degree of the information is relatively low and meets the first preset condition, and the unlicensed frequency band with relatively low transmission reliability may be determined as a frequency band for sending the information; if information collected by a terminal device includes that the temperature difference between the cable temperature and the ambient temperature is greater than 3 degrees Celsius but less than 5 degrees Celsius, it may be considered that an emergency degree of the information is ordinary and meets the second preset condition, and the non-dedicated licensed frequency band with ordinary transmission reliability may be determined as a frequency band for sending the information; or if information collected by a terminal device includes that the temperature difference between the cable temperature and the ambient temperature is greater than 5 degrees Celsius, it may be considered that an emergency degree of the information is relatively high and meets the third preset condition, and the dedicated licensed frequency band with relatively high transmission reliability may be determined as a frequency band for sending the information.

It should be understood that the foregoing embodiment is merely an example for description, and a manner of determining a preset condition varies depending on information content or a currently used frequency band. For example, when information collected by a terminal device is current intensity information, different preset conditions may be set depending on current intensity. For another example, if currently available frequency bands include only a 230 MHz frequency band and a 2.4 GHz frequency band, preset conditions may be classified into two levels. Therefore, this example is not limited thereto. In the power communications system, any method that can be used to determine a target frequency band for to-be-sent information based on a preset condition shall fall within the protection scope of the present invention.

Therefore, according to the method for transmitting information in a power communications system provided in this example, the monitoring-type information of the relatively low emergency degree may be sent by using the unlicensed frequency band, the monitoring-type information of the ordinary emergency degree may be sent by using the non-dedicated licensed frequency band, and the monitoring-type information of the relatively high emergency degree may be sent by using the dedicated licensed frequency band. This can meet transmission requirements of monitoring-type information of different emergency degrees, and performance of the power communications system is improved.

Optionally, in the method 200, the dedicated licensed frequency band is a 230 MHz frequency band, the unlicensed frequency band is a 2.4 GHz frequency band or a 5 GHz frequency band, and the non-dedicated licensed frequency band is a 1.8 GHz frequency band.

Therefore, according to the method for transmitting information in a power communications system provided in this example, the target frequency band is determined from the at least two frequency bands based on the information type of the to-be-sent information, and the to-be-sent information is sent by using the target frequency band, so that a frequency band licensing status of the selected target frequency band can be adapted to the information type of the to-be-sent information, transmission requirements of information of different information types can be flexibly met, and the performance of the power communications system is improved.

FIG. 4 is a schematic flowchart of a method for transmitting information in a power communications system according to an example. The method shown in FIG. 4 may be performed by a transmit end device, and the transmit end device may be the electric brake 130, the sensor 140, or the smart meter 150 in FIG. 1, may be the power control center 110 in FIG. 1, or may be the forwarding device 120 in FIG. 1. As shown in FIG. 3, the method 400 includes the following steps.

S410. Determine a target frequency band from at least two frequency bands based on an emergency degree of to-be-sent information and a correspondence between the emergency degree and a frequency band.

S420. Send the to-be-sent information by using the target frequency band.

For example, if a power sensor collects information indicating that a cable temperature is the same as an ambient temperature, a power communications system may determine that the information is information of a relatively low emergency degree, and may further determine an unlicensed frequency band as a target frequency band for the information. If the power sensor collects information indicating that a cable temperature is 5 degrees Celsius higher than an ambient temperature, a power communications system may determine that the information is information of a relatively high emergency degree, and may further determine a licensed frequency band as a target frequency band for the information.

For another example, if a power control center sends, to an electric brake, information instructing to open the electric brake, the power communications system may determine that the information is information of a relatively high emergency degree, and may further determine a dedicated licensed frequency band as a target frequency band for the information. If a power control center sends, to a smart meter, information instructing to report power usage readings, the power communications system may determine that the information is information of a relatively low emergency degree, and may further determine a non-dedicated licensed frequency band as a target frequency band for the information.

It should be understood that the foregoing embodiment is merely an example for description, and this example is not limited thereto. Any power communications network that allows information to be transmitted by using at least two frequency bands and that can adapt a frequency band licensing status of a selected target frequency band to an emergency degree of to-be-sent information shall fall within the protection scope of the present invention. Therefore, according to the method for transmitting information in a power communications system provided in this example, the target frequency band may be determined based on the emergency degree of the to-be-sent information, so that transmission requirements of information of different emergency degrees can be met, and performance of the power communications system is improved.

Optionally, the at least two frequency bands used by the power communications system in the method 400 include at least two of the dedicated licensed frequency band, the non-dedicated licensed frequency band, and the unlicensed frequency band.

Optionally, in the method 400, the determining a target frequency band from at least two frequency bands based on an emergency degree of to-be-sent information and a correspondence between the emergency degree and a frequency band specifically includes the following steps.

S411. Determine the unlicensed frequency band as the target frequency band for the to-be-sent information if the emergency degree of the to-be-sent information meets a first preset condition.

S412. Determine the non-dedicated licensed frequency band as the target frequency band for the to-be-sent information if the emergency degree of the to-be-sent information meets a second preset condition.

S413. Determine the dedicated licensed frequency band as the target frequency band for the to-be-sent information if the emergency degree of the to-be-sent information meets a third preset condition.

An emergency degree corresponding to the third preset condition is higher than an emergency degree corresponding to the first preset condition and an emergency degree corresponding to the second preset condition.

Information content of the to-be-sent information may be different; therefore, the to-be-sent information may have different emergency degrees in the power communications system, and the emergency degree of the to-be-sent information may be determined based on a preset condition.

For example, when the to-be-sent information is a difference between a cable temperature and an ambient temperature, the preset condition may be as follows: If information collected by a terminal device includes that the temperature difference between the cable temperature and the ambient temperature is less than 3 degrees Celsius, it may be considered that an emergency degree of the information is relatively low and meets the first preset condition, and the unlicensed frequency band with relatively low transmission reliability may be determined as a frequency band for sending the information; if information collected by a terminal device includes that the temperature difference between the cable temperature and the ambient temperature is greater than 3 degrees Celsius but less than 5 degrees Celsius, it may be considered that an emergency degree of the information is ordinary and meets the second preset condition, and the non-dedicated licensed frequency band with ordinary transmission reliability may be determined as a frequency band for sending the information; or if information collected by a terminal device includes that the temperature difference between the cable temperature and the ambient temperature is greater than 5 degrees Celsius, it may be considered that an emergency degree of the information is relatively high and meets the third preset condition, and the dedicated licensed frequency band with relatively high transmission reliability may be determined as a frequency band for sending the information.

It should be understood that the foregoing embodiment is merely an example for description, and a manner of determining a preset condition varies depending on information content or a currently used frequency band. For example, when information collected by a terminal device is current intensity information, different preset conditions may be set depending on current intensity. For another example, if currently available frequency bands include only a 230 MHz frequency band and a 2.4 GHz frequency band, preset conditions may be classified into two levels. Therefore, this example is not limited thereto. In the power communications system, any method that can be used to determine a target frequency band for to-be-sent information based on a preset condition shall fall within the protection scope of the present invention. Therefore, according to the method for transmitting information in a power communications system provided in this example, the information of a relatively low emergency degree may be sent by using the unlicensed frequency band, the information of the ordinary emergency degree may be sent by using the non-dedicated licensed frequency band, and the information of a relatively high emergency degree may be sent by using the dedicated licensed frequency band, so that transmission requirements of information of different emergency degrees can be met, and performance of the power communications system is improved.

Optionally, in the method 400, the dedicated licensed frequency band is a 230 MHz frequency band, the unlicensed frequency band is a 2.4 GHz frequency band or a 5 GHz frequency band, and the non-dedicated licensed frequency band is a 1.8 GHz frequency band.

Therefore, according to the method for transmitting information in a power communications system provided in this example, the target frequency band is determined from the at least two frequency bands based on the emergency degree of the to-be-sent information and the correspondence between the emergency degree and the frequency band, and the to-be-sent information is sent by using the target frequency band, so that a frequency band licensing status of the selected target frequency band can be adapted to the emergency degree of the to-be-sent information, transmission requirements of information of different information types can be flexibly met, and the performance of the power communications system is improved.

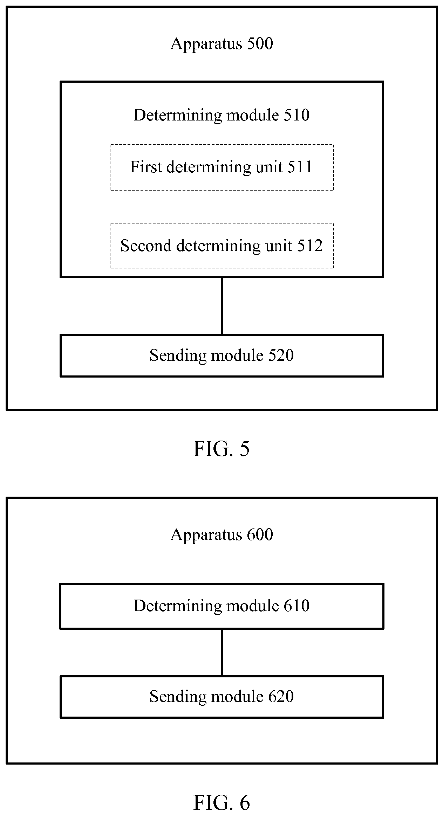

With reference to FIG. 3 and FIG. 4, the foregoing details the method for transmitting information in a power communications system according to the example. With reference to FIG. 5 and FIG. 6, the following details an apparatus for transmitting information in a power communications system according to the example.

FIG. 5 is a schematic block diagram of an apparatus for transmitting information in a power communications system according to an example. As shown in FIG. 5, the apparatus 500 includes:
a determining module 510, configured to determine a target frequency band from at least two frequency bands based on an information type of to-be-sent information and a correspondence between the information type and a frequency band; and
a sending module 520, configured to send the to-be-sent information by using the target frequency band determined by the determining module 510.

The apparatus 500 for transmitting information in a power communications system provided in this example determines the target frequency band from the at least two frequency bands based on the information type of the to-be-sent information, and sends the to-be-sent information by using the target frequency band, so that a frequency band licensing status of the selected target frequency band can be adapted to the information type of the to-be-sent information, transmission requirements of information of different information types can be flexibly met, and performance of a power communications system is improved.

Optionally, the determining module 510 includes:
a first determining unit 511, configured to determine a candidate target frequency band from the at least two frequency bands based on the information type of the to-be-sent information and the correspondence between the information type and the frequency band; and
a second determining unit 512, configured to determine a target frequency band from the candidate target frequency band based on an emergency degree of the to-be-sent information.

The apparatus for transmitting information in a power communications system provided in this example may determine the target frequency band based on the emergency degree of the to-be-sent information, so that transmission requirements of information of different emergency degrees can be met, and the performance of the power communications system is improved.

Optionally, the at least two frequency bands determined by the apparatus 500 include at least two of a dedicated licensed frequency band, a non-dedicated licensed frequency band, and an unlicensed frequency band that are used by the power communications system.

Optionally, the information type of the to-be-transmitted information includes a control type, a monitoring type, or a metering type.

Optionally, the determining module 510 is specifically configured to:
determine the dedicated licensed frequency band as the target frequency band for the to-be-sent information if the information type of the to-be-sent information is the control type;
determine the dedicated licensed frequency band, the unlicensed frequency band, or the non-dedicated licensed frequency band as the target frequency band for the to-be-sent information if the information type of the to-be-sent information is the monitoring type; or
determine the unlicensed frequency band or the non-dedicated licensed frequency band as the target frequency band for the to-be-sent information if the information type of the to-be-sent information is the metering type.

Therefore, the apparatus for transmitting information in a power communications system provided in this example may send control-type information by using the dedicated licensed frequency band, send monitoring-type information by using the dedicated licensed frequency band, the unlicensed frequency band, or the non-dedicated licensed frequency band, and send metering-type information by using the unlicensed frequency band or the non-dedicated licensed frequency band. Therefore, a transmission requirement of the control-type information for relatively high information QoS or channel reliability can be met, a transmission requirement of the metering-type information for relatively large bandwidth but relatively low information QoS or channel reliability can be met, and performance of the power communications system is improved.

Optionally, when the dedicated licensed frequency band, the unlicensed frequency band, or the non-dedicated licensed frequency band is determined as the target frequency band for the to-be-sent information if the information type of the to-be-sent information is the monitoring type, the determining module 510 is specifically configured to:
determine the unlicensed frequency band as the target frequency band for the to-be-sent information if the information type of the to-be-sent information is the monitoring type and the emergency degree of the to-be-sent information meets a first preset condition;
determine the non-dedicated licensed frequency band as the target frequency band for the to-be-sent information if the information type of the to-be-sent information is the monitoring type and the emergency degree of the to-be-sent information meets a second preset condition; or
determine the dedicated licensed frequency band as the target frequency band for the to-be-sent information if the information type of the to-be-sent information is the monitoring type and the emergency degree of the to-be-sent information meets a third preset condition.

An emergency degree corresponding to the third preset condition is higher than an emergency degree corresponding to the first preset condition and an emergency degree corresponding to the second preset condition.

Therefore, the apparatus for transmitting information in a power communications system provided in this example may send monitoring-type information of a relatively low emergency degree by using the unlicensed frequency band, send monitoring-type information of an ordinary emergency degree by using the non-dedicated licensed frequency band, and send monitoring-type information of a relatively high emergency degree by using the dedicated licensed frequency band, so that transmission requirements of monitoring-type information of different emergency degrees can be met, and the performance of the power communications system is improved.

Optionally, the dedicated licensed frequency band used by the apparatus 500 is a 230 MHz frequency band, the unlicensed frequency band used by the apparatus 500 is a 2.4 GHz frequency band and/or a 5 GHz frequency band, and the non-dedicated licensed frequency band used by the apparatus 500 is a 1.8 GHz frequency band.

The apparatus 500 for transmitting information according to this example may correspond to the transmit end device in the method 300 in the example. In addition, the foregoing and other operations and/or functions of the modules in the apparatus 500 for transmitting information in FIG. 5 are used to implement procedures corresponding to steps in the method 300 in FIG. 3. For brevity, details are not described herein again.

The apparatus for transmitting information provided in this example determines the target frequency band from the at least two frequency bands based on the information type of the to-be-sent information, and sends the to-be-sent information by using the target frequency band, so that the frequency band licensing status of the selected target frequency band can be adapted to the information type of the to-be-sent information, transmission requirements of information of different information types can be flexibly met, and the performance of the power communications system is improved.

FIG. 6 is a schematic block diagram of an apparatus for transmitting information in a power communications system according to an example. As shown in FIG. 6, the apparatus 600 includes:
a determining module 610, configured to determine a target frequency band from at least two frequency bands based on an emergency degree of to-be-sent information and a correspondence between the emergency degree and a frequency band; and
a sending module 620, configured to send the to-be-sent information by using the target frequency band determined by the determining module 610.

The apparatus 600 for transmitting information in a power communications system provided in this example determines the target frequency band from the at least two frequency bands based on the emergency degree of the to-be-sent information and the correspondence between the emergency degree and the frequency band, and sends the to-be-sent information by using the target frequency band, so that a frequency band licensing status of the selected target frequency band can be adapted to the emergency degree of the to-be-sent information, transmission requirements of information of different emergency degrees can be flexibly met, and performance of a power communications system is improved.

Optionally, the at least two frequency bands used by the apparatus 600 include at least two of a dedicated licensed frequency band, a non-dedicated licensed frequency band, and an unlicensed frequency band that are used by the power communications system.

Optionally, the determining module 610 is specifically configured to:
determine the unlicensed frequency band as the target frequency band for the to-be-sent information if the emergency degree of the to-be-sent information meets a first preset condition;
determine the non-dedicated licensed frequency band as the target frequency band for the to-be-sent information if the emergency degree of the to-be-sent information meets a second preset condition; or
determine the dedicated licensed frequency band as the target frequency band for the to-be-sent information if the emergency degree of the to-be-sent information meets a third preset condition.

An emergency degree corresponding to the third preset condition is higher than an emergency degree corresponding to the first preset condition and an emergency degree corresponding to the second preset condition.

Therefore, the apparatus for transmitting information in a power communications system provided in this example may send information of a relatively low emergency degree by using the unlicensed frequency band, send information of an ordinary emergency degree by using the non-dedicated licensed frequency band, and send information of a relatively high emergency degree by using the dedicated licensed frequency band, so that transmission requirements of information of different emergency degrees can be met, and the performance of the power communications system is improved.

Optionally, the dedicated licensed frequency band used by the apparatus 600 is a 230 MHz frequency band, the unlicensed frequency band used by the apparatus 600 is a 2.4 GHz frequency band and/or a 5 GHz frequency band, and the non-dedicated licensed frequency band used by the apparatus 600 is a 1.8 GHz frequency band.

The apparatus 600 for transmitting information according to this example may correspond to the transmit end device in the method 400 in the example. In addition, the foregoing and other operations and/or functions of the modules in the apparatus 600 for transmitting information in FIG. 6 are used to implement procedures corresponding to steps in the method 400 in FIG. 4. For brevity, details are not described herein again.

The apparatus for transmitting information provided in this example determines the target frequency band from the at least two frequency bands based on the information type of the to-be-sent information, and sends the to-be-sent information by using the target frequency band, so that the frequency band licensing status of the selected target frequency band can be adapted to the information type of the to-be-sent information, transmission requirements of information of different information types can be flexibly met, and the performance of the power communications system is improved.

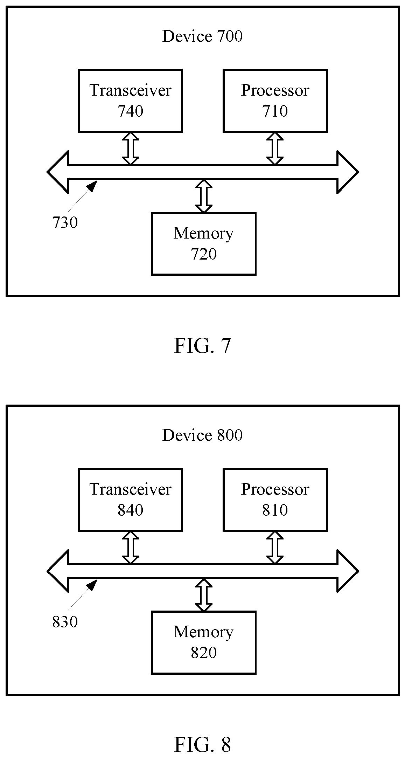

With reference to FIG. 3 to FIG. 6, the foregoing details the method and the apparatus for transmitting information in a power communications system according to the example. With reference to FIG. 7 and FIG. 8, the following details a device for transmitting information in a power communications system according to the example.

FIG. 7 is a schematic block diagram of a device for transmitting information in a power communications system according to an example. As shown in FIG. 7, the device 700 includes a processor 710, a memory 720, a bus system 730, and a transceiver 740. The processor 710, the memory 720, and the transceiver 740 are connected by using the bus system 730, the memory 720 is configured to store an instruction, and the processor 710 is configured to execute the instruction stored in the memory 720, so as to control the transceiver 740 to receive or send a signal.

The processor 710 is configured to determine a target frequency band from at least two frequency bands based on an information type of to-be-sent information and a correspondence between the information type and a frequency band. The transceiver 740 is configured to send the to-be-sent information by using the target frequency band determined by the processor 710.

Therefore, the device for transmitting information provided in this example determines the target frequency band from the at least two frequency bands based on the information type of the to-be-sent information, and sends the to-be-sent information by using the target frequency band, so that a frequency band licensing status of the selected target frequency band can be adapted to the information type of the to-be-sent information, transmission requirements of information of different information types can be flexibly met, and performance of a power communications system is improved.

It should be understood that in this example, the processor 710 may be a central processing unit (CPU, Central Processing Unit), or the processor 710 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor, or the like.

The memory 720 may include a read-only memory and a random access memory, and provide instructions and data for the processor 710. A part of the memory 720 may further include a non-volatile random access memory. For example, the memory 720 may further store device type information.

The bus system 730 may include a data bus, and may further include a power bus, a control bus, a status signal bus, and the like. However, for clear description, various buses are marked as the bus system 730 in the figure.

During implementation, steps of the foregoing methods may be implemented by using an integrated logical circuit of hardware in the processor 710, or by using a software instruction. The steps of the methods disclosed with reference to the example may be directly implemented by using a hardware processor, or may be implemented by using a combination of hardware and a software module in the processor. The software module may be located in a random access memory, a flash memory, a read-only memory, a programmable read-only memory, an electrical erasable programmable memory, a register, or another mature storage medium in the art. The storage medium is located in the memory 720. The processor 710 reads information in the memory 720 and completes the steps of the foregoing methods in combination with hardware of the processor 710. To avoid repetition, no detailed description is given herein again.

Optionally, in an embodiment, the processor 710 is configured to: determine a candidate target frequency band from the at least two frequency bands based on the information type of the to-be-sent information and the correspondence between the information type and the frequency band; and determine a target frequency band from the candidate target frequency band based on an emergency degree of the to-be-sent information.

The device for transmitting information in a power communications system provided in this example may determine the target frequency band based on the emergency degree of the to-be-sent information, so that transmission requirements of information of different emergency degrees can be met, and the performance of the power communications system is improved.

Optionally, in an embodiment, the at least two frequency bands determined by the processor 710 include at least two of a dedicated licensed frequency band, a non-dedicated licensed frequency band, and an unlicensed frequency band that are used by the power communications system.

Optionally, in an embodiment, types of information transmitted by the transceiver 740 include a control type, a monitoring type, or a metering type.

Optionally, in an embodiment, the processor 710 is specifically configured to:
determine the dedicated licensed frequency band as the target frequency band for the to-be-sent information if the information type of the to-be-sent information is the control type;
determine the dedicated licensed frequency band, the unlicensed frequency band, or the non-dedicated licensed frequency band as the target frequency band for the to-be-sent information if the information type of the to-be-sent information is the monitoring type; or
determine the unlicensed frequency band or the non-dedicated licensed frequency band as the target frequency band for the to-be-sent information if the information type of the to-be-sent information is the metering type.

Therefore, the device for transmitting information in a power communications system provided in this example may send control-type information by using the dedicated licensed frequency band, send monitoring-type information by using the dedicated licensed frequency band, the unlicensed frequency band, or the non-dedicated licensed frequency band, and send metering-type information by using the unlicensed frequency band or the non-dedicated licensed frequency band, so that a transmission requirement of the control-type information for relatively high information quality of service QoS or channel reliability can be met, a transmission requirement of the metering-type information for relatively large bandwidth but relatively low information QoS or channel reliability can be met, and the performance of the power communications system is improved.

Optionally, in an embodiment, if the information type of the to-be-sent information is a monitoring type, and a dedicated licensed frequency band, an unlicensed frequency band, or a non-dedicated licensed frequency band is determined as the target frequency band for the to-be-sent information, the processor 710 is specifically configured to:
determine the unlicensed frequency band as the target frequency band for the to-be-sent information if the information type of the to-be-sent information is the monitoring type and the emergency degree of the to-be-sent information meets a first preset condition;
determine the non-dedicated licensed frequency band as the target frequency band for the to-be-sent information if the information type of the to-be-sent information is the monitoring type and the emergency degree of the to-be-sent information meets a second preset condition; or
determine the dedicated licensed frequency band as the target frequency band for the to-be-sent information if the information type of the to-be-sent information is the monitoring type and the emergency degree of the to-be-sent information meets a third preset condition.

An emergency degree corresponding to the third preset condition is higher than an emergency degree corresponding to the first preset condition and an emergency degree corresponding to the second preset condition.

Therefore, the device for transmitting information in a power communications system provided in this example may send monitoring-type information of a relatively low emergency degree by using the unlicensed frequency band, send monitoring-type information of an ordinary emergency degree by using the non-dedicated licensed frequency band, and send monitoring-type information of a relatively high emergency degree by using the dedicated licensed frequency band, so that transmission requirements of monitoring-type information of different emergency degrees can be met, and the performance of the power communications system is improved.

Optionally, in an embodiment, a dedicated licensed frequency band used by the device 700 is a 230 MHz frequency band, an unlicensed frequency band used by the device 700 is a 2.4 GHz frequency band or a 5 GHz frequency band, and a non-dedicated licensed frequency band used by the device 700 is a 1.8 GHz frequency band.

The device 700 for transmitting information in a power communications system according to this example may correspond to the transmit end device in the method 300 in the example. In addition, the foregoing and other operations and/or functions of the modules in the device 700 for transmitting information in FIG. 7 are used to implement procedures corresponding to steps in the method 300 in FIG. 3. For brevity, details are not described herein again.

The device for transmitting information in a power communications system provided in this example determines the target frequency band from the at least two frequency bands based on the information type of the to-be-sent information, and sends the to-be-sent information by using the target frequency band, so that the frequency band licensing status of the selected target frequency band can be adapted to the information type of the to-be-sent information, transmission requirements of information of different information types can be flexibly met, and the performance of the power communications system is improved.

FIG. 8 is a schematic block diagram of a device for transmitting information in a power communications system according to an example. As shown in FIG. 8, the device 800 includes a processor 810, a memory 820, a bus system 830, and a transceiver 840. The processor 810, the memory 820, and the transceiver 840 are connected by using the bus system 830, the memory 820 is configured to store an instruction, and the processor 810 is configured to execute the instruction stored in the memory 820, so as to control the transceiver 840 to receive or send a signal.

The processor 810 is configured to determine a target frequency band from at least two frequency bands based on an emergency degree of to-be-sent information and a correspondence between the emergency degree and a frequency band. The transceiver 840 is configured to send the to-be-sent information by using the target frequency band determined by the processor 810.

Therefore, the device for transmitting information provided in this example determines the target frequency band from the at least two frequency bands based on the emergency degree of the to-be-sent information and the correspondence between the emergency degree and the frequency band, and sends the to-be-sent information by using the target frequency band, so that a frequency band licensing status of the selected target frequency band can be adapted to the emergency degree of the to-be-sent information, transmission requirements of information of different emergency degrees can be flexibly met, and performance of a power communications system is improved.

It should be understood that in this example, the processor 810 may be a CPU, or the processor 810 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor, or the like.

The memory 820 may include a read-only memory and a random access memory, and provide instructions and data for the processor 810. A part of the memory 820 may further include a non-volatile random access memory. For example, the memory 820 may further store device type information.

The bus system 830 may include a data bus, and may further include a power bus, a control bus, a status signal bus, and the like. However, for clear description, various buses are marked as the bus system 830 in the figure.

During implementation, steps of the foregoing methods may be implemented by using an integrated logical circuit of hardware in the processor 810, or by using a software instruction. The steps of the methods disclosed with reference to the example may be directly implemented by using a hardware processor, or may be implemented by using a combination of hardware and a software module in the processor. The software module may be located in a random access memory, a flash memory, a read-only memory, a programmable read-only memory, an electrical erasable programmable memory, a register, or another mature storage medium in the art. The storage medium is located in the memory 820. The processor 810 reads information in the memory 820 and completes the steps of the foregoing methods in combination with hardware of the processor 810. To avoid repetition, no detailed description is given herein again.

Optionally, in an embodiment, the at least two frequency bands used by the device 800 include at least two of a dedicated licensed frequency band, a non-dedicated licensed frequency band, and an unlicensed frequency band that are used by the power communications system.

Optionally, in an embodiment, the processor 810 invokes an instruction stored in the memory, so as to specifically:
determine the unlicensed frequency band as the target frequency band for the to-be-sent information if the emergency degree of the to-be-sent information meets a first preset condition;
determine the non-dedicated licensed frequency band as the target frequency band for the to-be-sent information if the emergency degree of the to-be-sent information meets a second preset condition; or
determine the dedicated licensed frequency band as the target frequency band for the to-be-sent information if the emergency degree of the to-be-sent information meets a third preset condition.

An emergency degree corresponding to the third preset condition is higher than an emergency degree corresponding to the first preset condition and an emergency degree corresponding to the second preset condition.

Therefore, the device for transmitting information in a power communications system provided in this example may send information of a relatively low emergency degree by using the unlicensed frequency band, send information of an ordinary emergency degree by using the non-dedicated licensed frequency band, and send information of a relatively high emergency degree by using the dedicated licensed frequency band, so that transmission requirements of information of different emergency degrees can be met, and the performance of the power communications system is improved.

Optionally, in an embodiment, a dedicated licensed frequency band used by the device 800 is a 230 MHz frequency band, an unlicensed frequency band used by the device 800 is a 2.4 GHz frequency band or a 5 GHz frequency band, and a non-dedicated licensed frequency band used by the device 800 is a 1.8 GHz frequency band.

The device 800 for transmitting information in a power communications system according to this example may correspond to the transmit end device in the method 400 in the example. In addition, the foregoing and other operations and/or functions of the modules in the device 800 for transmitting information in FIG. 8 are used to implement procedures corresponding to steps in the method 400 in FIG. 4. For brevity, details are not described herein again.

The device for transmitting information in a power communications system provided in this example determines the target frequency band from the at least two frequency bands based on the emergency degree of the to-be-sent information and the correspondence between the emergency degree and the frequency band, and sends the to-be-sent information by using the target frequency band, so that the frequency band licensing status of the selected target frequency band can be adapted to the emergency degree of the to-be-sent information, transmission requirements of information of different emergency degrees can be flexibly met, and the performance of the power communications system is improved.

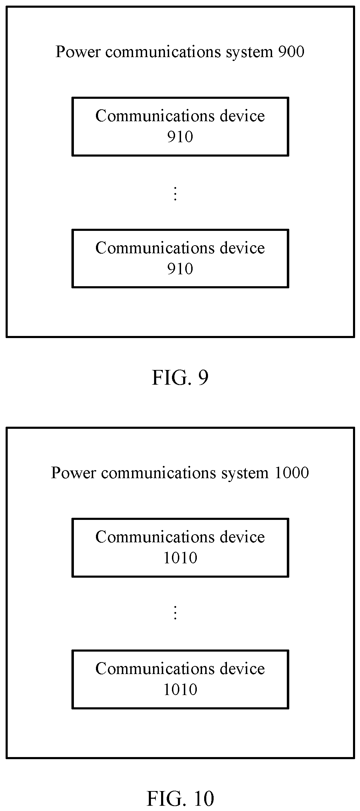

With reference to FIG. 9 and FIG. 10, the following details a power communications system according to the example.

FIG. 9 is a schematic block diagram of a power communications system according to an example. As shown in FIG. 9, the power communications system 900 uses at least two frequency bands for wireless communication, frequency band licensing statuses of the at least two frequency bands are different, the power communications system 900 includes a plurality of communications devices 910, and the plurality of communications devices 910 perform power communication by sending and receiving information. There is a correspondence between an information type of the information sent by the communications device 910 and the frequency band. When performing the power communication, the communications device 910 sends the information by using a frequency band corresponding to the information type of the information.

It should be understood that FIG. 9 shows only two communications devices 910, but this example is not limited thereto. The power communications system 900 in this example may further include another quantity of communications devices 910.

The communications device 910 that is included in the power communications system 900 provided in this example sends the information on the corresponding frequency band based on the correspondence between the information type and the frequency band. Specifically, in the system 900, some communications devices 910 need to send a plurality of types of information. For these communications devices, corresponding modules in the foregoing embodiments may be implemented in the devices in a software or hardware manner, so as to determine, based on information types of different to-be-sent information, frequency bands corresponding to the information types, and send the information on the frequency bands. A specific implementation is described in the foregoing embodiments, and details are not described herein again.

In addition, in the system 900, some communications devices 910 may send only one type of information. For example, some smart meters may send only metering-type information, while some sensors may send only monitoring-type information. It can be understood that these communications devices may be configured in the foregoing manner, that is, corresponding modules in the foregoing embodiments are configured in the devices, so that the devices can determine a corresponding frequency band based on the information type of the information and send the information. Alternatively, information sending manner of the foregoing devices may be directly configured, in a preset manner or the like, as sending information on a frequency band corresponding to an information type of the information sent by the devices. The second configuration manner can simplify the communications device and improve device adaptivity and system compatibility.

Optionally, in an embodiment, when the communications device 910 sends the information by using the frequency band corresponding to the information type of the to-be-sent information, the method further includes:
when the information type of the to-be-sent information corresponds to at least two frequency bands, determining a target frequency band from the at least two frequency bands based on an emergency degree of the to-be-sent information, and sending the to-be-sent information by using the target frequency band.

The power communications system 900 provided in this example may determine the target frequency band based on the emergency degree of the to-be-sent information, so that transmission requirements of information of different emergency degrees can be met, and performance of the power communications system is improved.

Optionally, in an embodiment, the at least two frequency bands include at least two of a dedicated licensed frequency band, a non-dedicated licensed frequency band, and an unlicensed frequency band that are used by the power communications system 900.

The information type of the to-be-sent information includes a control type, a monitoring type, or a metering type.

That when performing the power communication, the communications device 910 sends the to-be-sent information by using a frequency band corresponding to the information type of the to-be-sent information specifically includes:
sending, by the communications device, the to-be-sent information by using the dedicated licensed frequency band if the information type is the control type;
sending, by the communications device, the to-be-sent information by using the dedicated licensed frequency band, the unlicensed frequency band, or the non-dedicated licensed frequency band if the information type is the monitoring type; or
sending, by the communications device, the to-be-sent information by using the unlicensed frequency band or the non-dedicated licensed frequency band if the information type is the metering type.

Therefore, the power communications system 900 provided in this example may send control-type information by using the dedicated licensed frequency band, send monitoring-type information by using the dedicated licensed frequency band, the unlicensed frequency band, or the non-dedicated licensed frequency band, and send metering-type information by using the unlicensed frequency band or the non-dedicated licensed frequency band, so that a transmission requirement of the control-type information for relatively high information quality of service QoS or channel reliability can be met, a transmission requirement of the metering-type information for relatively large bandwidth but relatively low information QoS or channel reliability can be met, and the performance of the power communications system is improved.

Optionally, in an embodiment, the sending, by the communications device, the to-be-sent information by using the dedicated licensed frequency band, the unlicensed frequency band, or the non-dedicated licensed frequency band if the information type of the to-be-sent information is the monitoring type specifically includes:
if the information type of the to-be-sent information is the monitoring type and the emergency degree of the to-be-sent information meets a first preset condition, determining the unlicensed frequency band as the target frequency band for the to-be-sent information, and sending the to-be-sent information by using the target frequency band;
if the information type of the to-be-sent information is the monitoring type and the emergency degree of the to-be-sent information meets a second preset condition, determining the non-dedicated licensed frequency band as the target frequency band for the to-be-sent information, and sending the to-be-sent information by using the target frequency band; or
if the information type of the to-be-sent information is the monitoring type and the emergency degree of the to-be-sent information meets a third preset condition, determining the dedicated licensed frequency band as the target frequency band for the to-be-sent information, and sending the to-be-sent information by using the target frequency band.

An emergency degree corresponding to the third preset condition is higher than an emergency degree corresponding to the first preset condition and an emergency degree corresponding to the second preset condition.

Therefore, the power communications system 900 provided in this example may send monitoring-type information of a relatively low emergency degree by using the unlicensed frequency band, send monitoring-type information of an ordinary emergency degree by using the non-dedicated licensed frequency band, and send monitoring-type information of a relatively high emergency degree by using the dedicated licensed frequency band, so that transmission requirements of monitoring-type information of different emergency degrees can be met, and the performance of the power communications system is improved.

Optionally, in an embodiment, the dedicated licensed frequency band used by the power communications system is a 230 MHz frequency band, the unlicensed frequency band used by the power communications system is a 2.4 GHz frequency band or a 5 GHz frequency band, and the non-dedicated licensed frequency band used by the power communications system is a 1.8 GHz frequency band.

The power communications system 900 and the communications device 910 in the power communications system 900 according to this example may correspond to the transmit end device in the method in the example. In addition, the foregoing and other operations and/or functions of the communications device 910 for transmitting information in FIG. 9 are used to implement procedures corresponding to steps in the method 300 in FIG. 3. For brevity, details are not described herein again.

The power communications system 900 provided in this example determines the target frequency band from the at least two frequency bands based on the information type of the to-be-sent information, and sends the to-be-sent information by using the target frequency band, so that the frequency band licensing status of the selected target frequency band can be adapted to the information type or the emergency degree of the to-be-sent information, transmission requirements of information of different information types can be flexibly met, and the performance of the power communications system is improved.

FIG. 10 is another schematic block diagram of a power communications system according to an example. As shown in FIG. 10, the power communications system 1000 uses at least two frequency bands for wireless communication, frequency band licensing statuses of the at least two frequency bands are different, the power communications system 1000 includes a plurality of communications devices 1010, and the plurality of communications devices perform power communication by sending and receiving information. There is a correspondence between an emergency degree of the information sent by the communications device and the frequency band. When performing the power communication, the communications device sends the information by using a frequency band corresponding to the emergency degree of the information.

It should be understood that FIG. 10 shows only two communications devices 1010, but this example is not limited thereto. The power communications system 1000 in this example may further include another quantity of communications devices 1010.

The communications device 1010 that is included in the power communications system 1000 provided in this example sends corresponding information on a corresponding frequency band based on the correspondence between the emergency degree of the information and the frequency band. Specifically, in the system 1000, some communications devices 1010 need to send information of a plurality of emergency degrees. For these communications devices, corresponding modules in the foregoing embodiments may be implemented in the devices in a software or hardware manner, so as to determine, based on information types of different to-be-sent information, frequency bands corresponding to the emergency degrees of the information, and send the information on the corresponding frequency bands. A specific implementation is described in the foregoing embodiments, and details are not described herein again.

In addition, in the system 1000, emergency degrees of information sent by some communications devices 1010 are different. For example, some sensors may send monitoring-type information about a difference between a cable temperature and an ambient temperature, and information about different temperature differences corresponds to different emergency degrees. It can be understood that these communications devices may be configured in the foregoing manner, that is, corresponding modules in the foregoing embodiments are configured in the devices, so that the devices can determine a corresponding frequency band based on an emergency degree of information and send the information. Optionally, in an embodiment, when the communications device 1010 sends the information by using the frequency band corresponding to the emergency degree of the to-be-sent information, the method further includes:
when the information type of the to-be-sent information corresponds to at least two frequency bands, determining a target frequency band from the at least two frequency bands based on the emergency degree of the to-be-sent information, and sending the to-be-sent information by using the target frequency band.

The power communications system 1000 provided in this example may determine the target frequency band based on the emergency degree of the to-be-sent information, so that transmission requirements of information of different emergency degrees can be met, and the performance of the power communications system is improved.

Optionally, in an embodiment, the at least two frequency bands include at least two of a dedicated licensed frequency band, a non-dedicated licensed frequency band, and an unlicensed frequency band that are used by the power communications system 1000. Optionally, in an embodiment, the unlicensed frequency band is determined as the target frequency band for the to-be-sent information if the emergency degree of the to-be-sent information meets a first preset condition.

The non-dedicated licensed frequency band is determined as the target frequency band for the to-be-sent information if the emergency degree of the to-be-sent information meets a second preset condition.

The dedicated licensed frequency band is determined as the target frequency band for the to-be-sent information if the emergency degree of the to-be-sent information meets a third preset condition.

An emergency degree corresponding to the third preset condition is higher than an emergency degree corresponding to the first preset condition and an emergency degree corresponding to the second preset condition.

Therefore, the power communications system 1000 provided in this example may send information of a relatively low emergency degree by using the unlicensed frequency band, send information of an ordinary emergency degree by using the non-dedicated licensed frequency band, and send information of a relatively high emergency degree by using the dedicated licensed frequency band, so that transmission requirements of monitoring-type information of different emergency degrees can be met, and performance of the power communications system is improved.

Optionally, in an embodiment, the dedicated licensed frequency band used by the power communications system is a 230 MHz frequency band, the unlicensed frequency band used by the power communications system is a 2.4 GHz frequency band or a 5 GHz frequency band, and the non-dedicated licensed frequency band used by the power communications system is a 1.8 GHz frequency band.

The power communications system 1000 and the communications device 1010 in the power communications system 1000 according to this example may correspond to the transmit end device in the method in the example. In addition, the foregoing and other operations and/or functions of the communications device 1010 for transmitting information in FIG. 10 are used to implement procedures corresponding to steps in the method 400 in FIG. 4. For brevity, details are not described herein again.

The power communications system 1000 provided in this example determines the target frequency band from the at least two frequency bands based on the emergency degree of the to-be-sent information, and sends the to-be-sent information by using the target frequency band, so that the frequency band licensing status of the selected target frequency band can be adapted to the emergency degree of the to-be-sent information, transmission requirements of information of different emergency degrees can be flexibly met, and the performance of the power communications system is improved.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not be performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected depending on actual needs to achieve the objectives of the solutions of the example.

In addition, functional units in the example may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the example. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific example, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for transmitting information in a power communications system (900) of a power network, wherein the method is applied to a power communications system (900) that uses at least two frequency bands for wireless communication, frequency band licensing statuses of the at least two frequency bands are different, and the method comprises:
determining a target frequency band from the at least two frequency bands based on an information type of to-be-sent information and a correspondence between the information type and the frequency band; and
sending the to-be-sent information by using the target frequency band,
wherein the frequency band licensing statuses are selected from licensed for use in a power network, licensed for use in a telecommunication system, and unlicensed, wherein the determining a target frequency band from the at least two frequency bands based on an information type of to-be-sent information and a correspondence between the information type and the frequency band comprises:
determining a candidate target frequency band from the at least two frequency bands based on the information type of the to-be-sent information and the correspondence between the information type and the frequency band; and
determining a target frequency band from the candidate target frequency band based on an emergency degree of the to-be-sent information;
wherein the information type comprises a control type, a monitoring type, or a metering type;
wherein the determining a target frequency band from the at least two frequency bands based on an information type of to-be-sent information and a correspondence between the information type and the frequency band comprises:
determining the dedicated licensed frequency band as the target frequency band for the to-be-sent information if the information type of the to-be-sent information is the control type;
determining the dedicated licensed frequency band, the unlicensed frequency band, or the non-dedicated licensed frequency band as the target frequency band for the to-be-sent information if the information type of the to-be-sent information is the monitoring type; or
determining the unlicensed frequency band or the non-dedicated licensed frequency band as the target frequency band for the to-be-sent information if the information type of the to-be-sent information is the metering type;
wherein the determining the dedicated licensed frequency band, the unlicensed frequency band, or the non-dedicated licensed frequency band as the target frequency band for the to-be-sent information if the information type of the to-be-sent information is the monitoring type comprises:
determining the unlicensed frequency band as the target frequency band for the to-be-sent information if the information type of the to-be-sent information is the monitoring type and the emergency degree of the to-be-sent information meets a first preset condition;
determining the non-dedicated licensed frequency band as the target frequency band for the to-be-sent information if the information type of the to-be-sent information is the monitoring type and the emergency degree of the to-be-sent information meets a second preset condition; or
determining the dedicated licensed frequency band as the target frequency band for the to-be-sent information if the information type of the to-be-sent information is the monitoring type and the emergency degree of the to-be-sent information meets a third preset condition, wherein
an emergency degree corresponding to the third preset condition is higher than an emergency degree corresponding to the first preset condition and an emergency degree corresponding to the second preset condition.

2. The method according to claim 1 , wherein the at least two frequency bands comprise at least two of a dedicated licensed frequency band, a non-dedicated licensed frequency band, and an unlicensed frequency band that are used by the power communications system (900).

3. An apparatus (500) for transmitting information in a power communications system (900) of a power network, wherein the apparatus (500) is applied to a power communications system (900) that uses at least two frequency bands for wireless communication, frequency band licensing statuses of the at least two frequency bands are different, and the apparatus (500) comprises:
a determining module (510), configured to determine a target frequency band from the at least two frequency bands based on an information type of to-be-sent information and a correspondence between the information type and the frequency band; and
a sending module (520), configured to send the to-be-sent information by using the target frequency band determined by the determining module (510),
wherein the frequency band licensing statuses are selected from licensed for use in a power network, licensed for use in a telecommunication system, and unlicensed, wherein the determining module (510) comprises:
a first determining unit (511), configured to determine a candidate target frequency band from the at least two frequency bands based on the information type of the to-be-sent information and the correspondence between the information type and the frequency band; and
a second determining unit (512), configured to determine a target frequency band from the candidate target frequency band based on an emergency degree of the to-be-sent information;
wherein the information type comprises a control type, a monitoring type, or a metering type;
wherein the determining module (510) is specifically configured to:
determine the dedicated licensed frequency band as the target frequency band for the to-be-sent information if the information type of the to-be-sent information is the control type;
determine the dedicated licensed frequency band, the unlicensed frequency band, or the non-dedicated licensed frequency band as the target frequency band for the to-be-sent information if the information type of the to-be-sent information is the monitoring type; or
determine the unlicensed frequency band or the non-dedicated licensed frequency band as the target frequency band for the to-be-sent information if the information type of the to-be-sent information is the metering type;
wherein when the information type of the to-be-sent information is the monitoring type, and the dedicated licensed frequency band, the unlicensed frequency band, or the non-dedicated licensed frequency band is determined as the target frequency band for the to-be-sent information, the determining module (510) is specifically configured to:
determine the unlicensed frequency band as the target frequency band for the to-be-sent information if the information type of the to-be-sent information is the monitoring type and the emergency degree of the to-be-sent information meets a first preset condition;
determine the non-dedicated licensed frequency band as the target frequency band for the to-be-sent information if the information type of the to-be-sent information is the monitoring type and the emergency degree of the to-be-sent information meets a second preset condition; or
determine the dedicated licensed frequency band as the target frequency band for the to-be-sent information if the information type of the to-be-sent information is the monitoring type and the emergency degree of the to-be-sent information meets a third preset condition, wherein
an emergency degree corresponding to the third preset condition is higher than an emergency degree corresponding to the first preset condition and an emergency degree corresponding to the second preset condition.

4. The apparatus (500) according to claim 3, wherein the at least two frequency bands comprise at least two of a dedicated licensed frequency band, a non-dedicated licensed frequency band, and an unlicensed frequency band that are used by the power communications system (900).

5. A device (700) for transmitting information in a power communications system (900), wherein the device (700) is applied to a power communications system (900) that uses at least two frequency bands for wireless communication, frequency band licensing statuses of the at least two frequency bands are different, and the device (700) comprises:
an apparatus (500) according to claim 3, wherein
the determining module (510) comprises:
a processor (710) and a memory (720) connected to the processor (710), wherein
the processor (710) invokes an instruction stored in the memory (720), so as to determine a target frequency band from the at least two frequency bands based on an information type of to-be-sent information and a correspondence between the information type and the frequency band; and wherein
the sending module (520) comprises:
a transmitter, configured to send the to-be-sent information by using the target frequency band.

6. The device (700) according to claim 5, wherein the processor (710) invokes an instruction stored in the memory (720), so as to specifically: determine a candidate target frequency band from the at least two frequency bands based on the information type of the to-be-sent information and the correspondence between the information type and the frequency band; and determine a target frequency band from the candidate target frequency band based on an emergency degree of the to-be-sent information.

7. The device (700) according to claim 5 or 6, wherein the at least two frequency bands comprise at least two of a dedicated licensed frequency band, a non-dedicated licensed frequency band, and an unlicensed frequency band that are used by the power communications system (900).

8. The device (700) according to any one of claims 5 to 7, wherein the information type comprises a control type, a monitoring type, or a metering type.

9. The device (700) according to claim 8, wherein the processor (710) invokes an instruction stored in the memory (720), so as to specifically:
determine the dedicated licensed frequency band as the target frequency band for the to-be-sent information if the information type of the to-be-sent information is the control type;
determine the dedicated licensed frequency band, the unlicensed frequency band, or the non-dedicated licensed frequency band as the target frequency band for the to-be-sent information if the information type of the to-be-sent information is the monitoring type; or
determine the unlicensed frequency band or the non-dedicated licensed frequency band as the target frequency band for the to-be-sent information if the information type of the to-be-sent information is the metering type.

10. The device (700) according to claim 9, wherein when the information type of the to-be-sent information is the monitoring type, and the dedicated licensed frequency band, the unlicensed frequency band, or the non-dedicated licensed frequency band is determined as the target frequency band for the to-be-sent information, the processor (710) invokes an instruction stored in the memory (720), so as to:
determine the unlicensed frequency band as the target frequency band for the to-be-sent information if the information type of the to-be-sent information is the monitoring type and the emergency degree of the to-be-sent information meets a first preset condition;
determine the non-dedicated licensed frequency band as the target frequency band for the to-be-sent information if the information type of the to-be-sent information is the monitoring type and the emergency degree of the to-be-sent information meets a second preset condition; or
determine the dedicated licensed frequency band as the target frequency band for the to-be-sent information if the information type of the to-be-sent information is the monitoring type and the emergency degree of the to-be-sent information meets a third preset condition, wherein
an emergency degree corresponding to the third preset condition is higher than an emergency degree corresponding to the first preset condition and an emergency degree corresponding to the second preset condition.

11. A power communications system (900), wherein the power communications system (900) uses at least two frequency bands for wireless communication, frequency band licensing statuses of the at least two frequency bands are different,
the power communications system (900) comprises a plurality of communications devices (700) according to claim 5, and the plurality of communications devices (700) perform power communication by sending and receiving information, wherein there is a correspondence between an information type of the information sent by the communications device (700) and the frequency band, and when performing the power communication, the communications device (700) sends the information by using a frequency band corresponding to the information type of the information.

12. The power communications system (900) according to claim 11, wherein when the communications device (700) sends the information by using the frequency band corresponding to the information type of the information, the method further comprises:
when the information type of the information corresponds to at least two frequency bands, determining a target frequency band from the at least two frequency bands based on an emergency degree of the information, and sending the information by using the target frequency band.

13. The power communications system (900) according to claim 11 or 12, wherein
the at least two frequency bands comprise at least two of a dedicated licensed frequency band, a non-dedicated licensed frequency band, and an unlicensed frequency band that are used by the power communications system (900);
the information type comprises a control type, a monitoring type, or a metering type; and
that when performing the power communication, the communications device (700) sends the information by using a frequency band corresponding to the information type of the information specifically comprises:
sending, by the communications device (700), the information by using the dedicated licensed frequency band if the information type of the information is the control type;
sending, by the communications device (700), the information by using the dedicated licensed frequency band, the unlicensed frequency band, or the non-dedicated licensed frequency band if the information type of the information is the monitoring type; or
sending, by the communications device (700), the information by using the unlicensed frequency band or the non-dedicated licensed frequency band if the information type of the information is the metering type.

14. The power communications system (900) according to claim 13, wherein the sending, by the communications device (700), the information by using the dedicated licensed frequency band, the unlicensed frequency band, or the non-dedicated licensed frequency band if the information type of the information is the monitoring type specifically comprises:
if the information type of the information is the monitoring type and the emergency degree of the information meets a first preset condition, determining the unlicensed frequency band as the target frequency band for the information, and sending the information by using the target frequency band;
if the information type of the information is the monitoring type and the emergency degree of the information meets a second preset condition, determining the non-dedicated licensed frequency band as the target frequency band for the information, and sending the information by using the target frequency band; or
if the information type of the information is the monitoring type and the emergency degree of the information meets a third preset condition, determining the dedicated licensed frequency band as the target frequency band for the information, and sending the information by using the target frequency band, wherein
an emergency degree corresponding to the third preset condition is higher than an emergency degree corresponding to the first preset condition and an emergency degree corresponding to the second preset condition.

## Patentansprüche

1. Verfahren zum Übertragen von Informationen in einem Stromversorgungskommunikationssystem (900) eines Stromversorgungsnetzes, wobei das Verfahren auf ein Stromversorgungskommunikationssystem (900), das wenigstens zwei Frequenzbänder zur Drahtloskommunikation verwendet, angewendet wird, wobei die Frequenzbandlizenzierungsstatus der wenigstens zwei Frequenzbänder unterschiedlich sind, und wobei das Verfahren Folgendes umfasst:
Bestimmen eines Zielfrequenzbandes aus den wenigstens zwei Frequenzbändern auf der Basis eines Informationstyps der zu sendenden Informationen und einer Entsprechung zwischen dem Informationstyp und dem Frequenzband; und
Senden der zu sendenden Informationen unter Verwendung des Zielfrequenzbandes,
wobei die Frequenzbandlizenzierungsstatus ausgewählt sind aus lizenziert zur Verwendung in einem Stromversorgungsnetz, lizenziert zur Verwendung in einem Telekommunikationssystem und unlizenziert, wobei das Bestimmen eines Zielfrequenzbandes aus den wenigstens zwei Frequenzbändern auf der Basis eines Informationstyps der zu sendenden Informationen und einer Entsprechung zwischen dem Informationstyp und dem Frequenzband Folgendes umfasst:
Bestimmen eines Kandidaten-Zielfrequenzbandes aus den wenigstens zwei Frequenzbändern auf der Basis des Informationstyps der zu sendenden Informationen und der Entsprechung zwischen dem Informationstyp und dem Frequenzband; und
Bestimmen eines Zielfrequenzbandes aus dem Kandidaten-Zielfrequenzband auf der Basis eines Notfallgrades der zu sendenden Informationen;
wobei der Informationstyp einen Steuerungstyp, einen Überwachungstyp oder einen Ablesetyp umfasst;
wobei das Bestimmen eines Zielfrequenzbandes aus den wenigstens zwei Frequenzbändern auf der Basis eines Informationstyps der zu sendenden Informationen und einer Entsprechung zwischen dem Informationstyp und dem Frequenzband Folgendes umfasst:
Bestimmen des dedizierten lizenzierten Frequenzbandes als das Zielfrequenzband für die zu sendenden Informationen, falls der Informationstyp der zu sendenden Informationen der Steuerungstyp ist;
Bestimmen des dedizierten lizenzierten Frequenzbandes, des unlizenzierten Frequenzbandes oder des nicht dedizierten lizenzierten Frequenzbandes als das Zielfrequenzband für die zu sendenden Informationen, falls der Informationstyp der zu sendenden Informationen der Überwachungstyp ist; oder
Bestimmen des unlizenzierten Frequenzbandes oder des nicht dedizierten lizenzierten Frequenzbandes als das Zielfrequenzband für die zu sendenden Informationen, falls der Informationstyp der zu sendenden Informationen der Ablesetyp ist;
wobei das Bestimmen des dedizierten lizenzierten Frequenzbandes, des unlizenzierten Frequenzbandes oder des nicht dedizierten lizenzierten Frequenzbandes als das Zielfrequenzband für die zu sendenden Informationen, falls der Informationstyp der zu sendenden Informationen der Überwachungstyp ist, Folgendes umfasst:
Bestimmen des unlizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine erste voreingestellte Bedingung erfüllt;
Bestimmen des nicht dedizierten lizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine zweite voreingestellte Bedingung erfüllt; oder
Bestimmen des dedizierten lizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine dritte voreingestellte Bedingung erfüllt, wobei
ein Notfallgrad, der der dritten voreingestellten Bedingung entspricht, höher ist als ein Notfallgrad, der der ersten voreingestellten Bedingung entspricht, und ein Notfallgrad, der der zweiten voreingestellten Bedingung entspricht.

2. Verfahren nach Anspruch 1, wobei die wenigstens zwei Frequenzbänder wenigstens zwei aus einem dedizierten lizenzierten Frequenzband, einem nicht dedizierten lizenzierten Frequenzband und einem unlizenzierten Frequenzband, die durch das Stromversorgungskommunikationssystem (900) verwendet werden, umfassen.

3. Einrichtung (500) zum Übertragen von Informationen in einem Stromversorgungskommunikationssystem (900) eines Stromversorgungsnetzes, wobei die Einrichtung (500) auf ein Stromversorgungskommunikationssystem (900), das wenigstens zwei Frequenzbänder zur Drahtloskommunikation verwendet, angewandt wird, wobei die Frequenzbandlizenzierungsstatus der wenigstens zwei Frequenzbänder unterschiedlich sind, und wobei die Einrichtung (500) Folgendes umfasst:
ein Bestimmungsmodul (510), das konfiguriert ist, ein Zielfrequenzband aus den wenigstens zwei Frequenzbändern auf der Basis eines Informationstyps der zu sendenden Informationen und einer Entsprechung zwischen dem Informationstyp und dem Frequenzband zu bestimmen; und
ein Sendemodul (520), das konfiguriert ist, die zu sendenden Informationen unter Verwendung des durch das Bestimmungsmodul (510) bestimmten Zielfrequenzbandes zu senden,
wobei die Frequenzbandlizenzierungsstatus aus lizenziert zur Verwendung in einem Stromnetz, lizenziert zur Verwendung in einem Telekommunikationssystem und unlizenziert ausgewählt sind, wobei das Bestimmungsmodul (510) Folgendes umfasst:
eine erste Bestimmungseinheit (511), die konfiguriert ist, ein Kandidaten-Zielfrequenzband aus den wenigstens zwei Frequenzbändern auf der Basis des Informationstyps der zu sendenden Informationen und der Entsprechung zwischen dem Informationstyp und dem Frequenzband zu bestimmen; und
eine zweite Bestimmungseinheit (512), die konfiguriert ist, ein Zielfrequenzband aus dem Kandidaten-Zielfrequenzband auf der Basis eines Notfallgrades der zu sendenden Informationen zu bestimmen;
wobei der Informationstyp einen Steuerungstyp, einen Überwachungstyp oder einen Ablesetyp umfasst;
wobei das Bestimmungsmodul (510) insbesondere konfiguriert ist zum:
Bestimmen des dedizierten lizenzierten Frequenzbandes als das Zielfrequenzband für die zu sendenden Informationen, falls der Informationstyp der zu sendenden Informationen der Steuerungstyp ist;
Bestimmen des dedizierten lizenzierten Frequenzbandes, des unlizenzierten Frequenzbandes oder des nicht dedizierten lizenzierten Frequenzbandes als das Zielfrequenzband für die zu sendenden Informationen, falls der Informationstyp der zu sendenden Informationen der Überwachungstyp ist; oder
Bestimmen des unlizenzierten Frequenzbandes oder des nicht dedizierten lizenzierten Frequenzbandes als das Zielfrequenzband für die zu sendenden Informationen, falls der Informationstyp der zu sendenden Informationen der Ablesetyp ist;
wobei dann, wenn der Informationstyp der zu sendenden Informationen der Überwachungstyp ist und das dedizierte lizenzierte Frequenzband, das unlizenzierte Frequenzband oder das nicht dedizierte lizenzierte Frequenzband als das Zielfrequenzband für die zu sendenden Informationen bestimmt ist, das Bestimmungsmodul (510) insbesondere konfiguriert ist zum:
Bestimmen des unlizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine erste voreingestellte Bedingung erfüllt;
Bestimmen des nicht dedizierten lizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine zweite voreingestellte Bedingung erfüllt; oder
Bestimmen des dedizierten lizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine dritte voreingestellte Bedingung erfüllt, wobei
ein Notfallgrad, der der dritten voreingestellten Bedingung entspricht, höher ist als ein Notfallgrad, der der ersten voreingestellten Bedingung entspricht, und ein Notfallgrad, der der zweiten voreingestellten Bedingung entspricht.

4. Einrichtung (500) nach Anspruch 3, wobei die wenigstens zwei Frequenzbänder wenigstens zwei aus einem dedizierten lizenzierten Frequenzband, einem nicht dedizierten lizenzierten Frequenzband und einem unlizenzierten Frequenzband, die durch das Stromversorgungskommunikationssystem (900) verwendet werden, umfassen.

5. Vorrichtung (700) zum Übertragen von Informationen in einem Stromversorgungskommunikationssystem (900), wobei die Vorrichtung (700) auf ein Stromversorgungskommunikationssystem (900), das wenigstens zwei Frequenzbänder zur Drahtloskommunikation verwendet, angewandt wird, wobei die Frequenzbandlizenzierungsstatus der wenigstens zwei Frequenzbänder unterschiedlich sind, und wobei die Vorrichtung (700) Folgendes umfasst:
eine Einrichtung (500) nach Anspruch 3, wobei
das Bestimmungsmodul (510) Folgendes umfasst:
einen Prozessor (710) und einen mit dem Prozessor (710) verbundenen Speicher (720), wobei
der Prozessor (710) eine in dem Speicher (720) gespeicherte Anweisung aufruft, um ein Zielfrequenzband aus den wenigstens zwei Frequenzbändern auf der Basis eines Informationstyps der zu sendenden Informationen und einer Entsprechung zwischen dem Informationstyp und dem Frequenzband zu bestimmen; und wobei das Sendemodul (520) Folgendes umfasst:
einen Sender, der konfiguriert ist, die zu sendenden Informationen unter Verwendung des Zielfrequenzbandes zu senden.

6. Vorrichtung (700) nach Anspruch 5, wobei der Prozessor (710) eine in dem Speicher (720) gespeicherte Anweisung aufruft, insbesondere zum: Bestimmen eines Kandidaten-Zielfrequenzbandes aus den wenigstens zwei Frequenzbändern auf der Basis des Informationstyps der zu sendenden Informationen und der Entsprechung zwischen dem Informationstyp und dem Frequenzband; und Bestimmen eines Zielfrequenzbandes aus dem Kandidaten-Zielfrequenzband auf der Basis eines Notfallgrades der zu sendenden Informationen.

7. Vorrichtung (700) nach Anspruch 5 oder 6, wobei die wenigstens zwei Frequenzbänder wenigstens zwei aus einem dedizierten lizenzierten Frequenzband, einem nicht dedizierten lizenzierten Frequenzband und einem unlizenzierten Frequenzband, die durch das Stromversorgungskommunikationssystem (900) verwendet werden, umfassen.

8. Vorrichtung (700) nach einem der Ansprüche 5 bis 7, wobei der Informationstyp einen Steuerungstyp, einen Überwachungstyp oder einen Ablesetyp umfasst.

9. Vorrichtung (700) nach Anspruch 8, wobei der Prozessor (710) eine in dem Speicher (720) gespeicherte Anweisung aufruft, insbesondere zum:
Bestimmen des dedizierten lizenzierten Frequenzbandes als das Zielfrequenzband für die zu sendenden Informationen, falls der Informationstyp der zu sendenden Informationen der Steuerungstyp ist;
Bestimmen des dedizierten lizenzierten Frequenzbandes, des unlizenzierten Frequenzbandes oder des nicht dedizierten lizenzierten Frequenzbandes als das Zielfrequenzband für die zu sendenden Informationen, falls der Informationstyp der zu sendenden Informationen der Überwachungstyp ist; oder
Bestimmen des unlizenzierten Frequenzbandes oder des nicht dedizierten lizenzierten Frequenzbandes als das Zielfrequenzband für die zu sendenden Informationen, falls der Informationstyp der zu sendenden Informationen der Ablesetyp ist.

10. Vorrichtung (700) nach Anspruch 9, wobei dann, wenn der Informationstyp der zu sendenden Informationen der Überwachungstyp ist und das dedizierte lizenzierte Frequenzband, das unlizenzierte Frequenzband oder das nicht dedizierte lizenzierte Frequenzband als das Zielfrequenzband für die zu sendenden Informationen bestimmt ist, der Prozessor (710) eine in dem Speicher (720) gespeicherte Anweisung aufruft zum:
Bestimmen des unlizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine erste voreingestellte Bedingung erfüllt;
Bestimmen des nicht dedizierten lizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine zweite voreingestellte Bedingung erfüllt; oder
Bestimmen des dedizierten lizenzierten Frequenzbandes als das Zielfrequenzband für die zu sendenden Informationen, falls der Informationstyp der zu sendenden Informationen der Überwachungstyp ist und der Notfallgrad der zu sendenden Informationen eine dritte voreingestellte Bedingung erfüllt, wobei
ein Notfallgrad, der der dritten voreingestellten Bedingung entspricht, höher ist als ein Notfallgrad, der der ersten voreingestellten Bedingung entspricht, und ein Notfallgrad, der der zweiten voreingestellten Bedingung entspricht.

11. Stromversorgungskommunikationssystem (900), wobei das Stromversorgungskommunikationssystem (900) wenigstens zwei Frequenzbänder zur Drahtloskommunikation verwendet, wobei die Frequenzbandlizenzierungsstatus der wenigstens zwei Frequenzbänder unterschiedlich sind,
das Stromversorgungskommunikationssystem (900) mehrere Kommunikationsvorrichtungen (700) nach Anspruch 5 umfasst, und die mehreren Kommunikationsvorrichtungen (700) Stromversorgungskommunikation durch Senden und Empfangen von Informationen ausführen, wobei eine Entsprechung zwischen einem Informationstyp der durch die Kommunikationsvorrichtung (700) gesendeten Informationen und dem Frequenzband vorhanden ist, und die Kommunikationsvorrichtung (700), wenn die Stromversorgungskommunikation ausgeführt wird, die Informationen unter Verwendung eines dem Informationstyp der Informationen entsprechenden Frequenzbandes sendet.

12. Stromversorgungskommunikationssystem (900) nach Anspruch 11, wobei das Verfahren, wenn die Kommunikationsvorrichtung (700) die Informationen unter Verwendung des Frequenzbandes, das dem Informationstyp der Informationen entspricht, sendet, ferner Folgendes umfasst:
wenn der Informationstyp der Informationen wenigstens zwei Frequenzbändern entspricht, Bestimmen eines Zielfrequenzbandes aus den wenigstens zwei Frequenzbändern auf der Basis eines Notfallgrades der Informationen und Senden der Informationen unter Verwendung des Zielfrequenzbandes.

13. Stromversorgungskommunikationssystem (900) nach Anspruch 11 oder 12, wobei die wenigstens zwei Frequenzbänder wenigstens zwei aus einem dedizierten lizenzierten Frequenzband, einem nicht dedizierten lizenzierten Frequenzband und einem unlizenzierten Frequenzband, die durch das Stromversorgungskommunikationssystem (900) verwendet werden, umfassen;
der Informationstyp einen Steuerungstyp, einen Überwachungstyp oder einen Ablesetyp umfasst; und
dass die Kommunikationsvorrichtung (700), wenn sie die Stromversorgungskommunikation ausführt, die Informationen unter Verwendung eines Frequenzbandes, das dem Informationstyp der Informationen entspricht, sendet, insbesondere Folgendes umfasst:
Senden der Informationen durch die Kommunikationsvorrichtung (700) unter Verwendung des dedizierten lizenzierten Frequenzbandes, falls der Informationstyp der Informationen der Steuerungstyp ist;
Senden der Informationen durch die Kommunikationsvorrichtung (700) unter Verwendung des dedizierten lizenzierten Frequenzbandes, des unlizenzierten Frequenzbandes oder des nicht dedizierten lizenzierten Frequenzbandes, falls der Informationstyp der Informationen der Überwachungstyp ist; oder
Senden der Informationen durch die Kommunikationsvorrichtung (700) unter Verwendung des unlizenzierten Frequenzbandes oder des nicht dedizierten lizenzierten Frequenzbandes, falls der Informationstyp der Informationen der Ablesetyp ist.

14. Stromversorgungskommunikationssystem (900) nach Anspruch 13, wobei das Senden der Informationen durch die Kommunikationsvorrichtung (700) unter Verwendung des dedizierten lizenzierten Frequenzbandes, des unlizenzierten Frequenzbandes oder des nicht dedizierten lizenzierten Frequenzbandes, falls der Informationstyp der Informationen der Überwachungstyp ist, insbesondere Folgendes umfasst:
falls der Informationstyp der Informationen der Überwachungstyp ist und der Notfallgrad der Informationen eine erste voreingestellte Bedingung erfüllt, Bestimmen des unlizenzierten Frequenzbandes als das Zielfrequenzband für die Informationen und Senden der Informationen unter Verwendung des Zielfrequenzbandes;
falls der Informationstyp der Informationen der Überwachungstyp ist und der Notfallgrad der Informationen eine zweite voreingestellte Bedingung erfüllt, Bestimmen des nicht dedizierten lizenzierten Frequenzbandes als das Zielfrequenzband für die Informationen und Senden der Informationen unter Verwendung des Zielfrequenzbandes; oder
falls der Informationstyp der Informationen der Überwachungstyp ist und der Notfallgrad der Informationen eine dritte voreingestellte Bedingung erfüllt, Bestimmen des dedizierten lizenzierten Frequenzbandes als das Zielfrequenzband für die Informationen und Senden der Informationen unter Verwendung des Zielfrequenzbandes, wobei
ein Notfallgrad, der der dritten voreingestellten Bedingung entspricht, höher ist als ein Notfallgrad, der der ersten voreingestellten Bedingung entspricht, und ein Notfallgrad, der der zweiten voreingestellten Bedingung entspricht.

## Revendications

1. Procédé de transmission d'informations dans un système de communication d'énergie (900) d'un réseau d'énergie, le procédé s'appliquant à un système de communication d'énergie (900) qui utilise au moins deux bandes de fréquences pour la communication sans fil, des états d'attribution de licence de bande de fréquences des au moins deux bandes de fréquences étant différents, et le procédé comprenant :
la détermination d'une bande de fréquences cible parmi les au moins deux bandes de fréquences sur la base d'un type d'informations d'informations à envoyer et d'une correspondance entre le type d'informations et la bande de fréquences ; et
l'envoi des informations à envoyer au moyen de la bande de fréquences cible,
les états d'attribution de licence de bande de fréquences étant sélectionnés parmi sous licence d'utilisation dans un réseau d'énergie, sous licence d'utilisation dans un système de télécommunication et sans licence, la détermination d'une bande de fréquences cible parmi les au moins deux bandes de fréquences sur la base d'un type d'informations d'informations à envoyer et d'une correspondance entre le type d'informations et la bande de fréquences comprenant :
la détermination d'une bande de fréquences cible candidate parmi les au moins deux bandes de fréquences sur la base du type d'informations des informations à envoyer et de la correspondance entre le type d'informations et la bande de fréquences ; et
la détermination d'une bande de fréquences cible à partir de la bande de fréquences cible candidate sur la base d'un degré d'urgence des informations à envoyer ;
le type d'informations comprenant un type commande, un type surveillance ou un type comptage ;
la détermination d'une bande de fréquences cible parmi les au moins deux bandes de fréquences sur la base d'un type d'informations d'informations à envoyer et d'une correspondance entre le type d'informations et la bande de fréquences comprenant :
la détermination de la bande de fréquences sous licence dédiée comme la bande de fréquences cible pour les informations à envoyer si le type d'informations des informations à envoyer est le type commande ;
la détermination de la bande de fréquences sous licence dédiée, de la bande de fréquences sans licence ou de la bande de fréquences sous licence non dédiée comme la bande de fréquences cible pour les informations à envoyer si le type d'informations des informations à envoyer est le type surveillance ; ou
la détermination de la bande de fréquences sans licence ou de la bande de fréquences sous licence non dédiée comme la bande de fréquences cible pour les informations à envoyer si le type d'informations des informations à envoyer est le type comptage ;
la détermination de la bande de fréquences sous licence dédiée, de la bande de fréquences sans licence ou de la bande de fréquences sous licence non dédiée comme la bande de fréquences cible pour les informations à envoyer si le type d'informations des informations à envoyer est le type surveillance comprenant :
la détermination de la bande de fréquences sans licence comme la bande de fréquences cible pour les informations à envoyer si le type d'informations des informations à envoyer est le type surveillance et le degré d'urgence des informations à envoyer satisfait à une première condition prédéfinie ;
la détermination de la bande de fréquences sous licence non dédiée comme la bande de fréquences cible pour les informations à envoyer si le type d'informations des informations à envoyer est le type surveillance et le degré d'urgence des informations à envoyer satisfait à une deuxième condition prédéfinie ; ou
la détermination de la bande de fréquences sous licence dédiée comme la bande de fréquences cible pour les informations à envoyer si le type d'informations des informations à envoyer est le type surveillance et le degré d'urgence des informations à envoyer satisfait à une troisième condition prédéfinie,
un degré d'urgence correspondant à la troisième condition prédéfinie étant plus élevé qu'un degré d'urgence correspondant à la première condition prédéfinie et qu'un degré d'urgence correspondant à la deuxième condition prédéfinie.

2. Procédé selon la revendication 1, dans lequel les au moins deux bandes de fréquences comprennent au moins deux bandes de fréquences parmi une bande de fréquences sous licence dédiée, une bande de fréquences sous licence non dédiée et une bande de fréquences sans licence qui sont utilisées par le système de communication d'énergie (900).

3. Appareil (500) de transmission d'informations dans un système de communication d'énergie (900) d'un réseau d'énergie, l'appareil (500) s'appliquant à un système de communication d'énergie (900) qui utilise au moins deux bandes de fréquences pour la communication sans fil, des états d'attribution de licence de bande de fréquences des au moins deux bandes de fréquences étant différents, et l'appareil (500) comprenant :
un module de détermination (510), configuré pour déterminer une bande de fréquences cible parmi les au moins deux bandes de fréquences sur la base d'un type d'informations d'informations à envoyer et d'une correspondance entre le type d'informations et la bande de fréquences ; et
un module d'envoi (520), configuré pour envoyer les informations à envoyer au moyen de la bande de fréquences cible déterminée par le module de détermination (510),
les états d'attribution de licence de bande de fréquences étant sélectionnés parmi sous licence d'utilisation dans un réseau d'énergie, sous licence d'utilisation dans un système de télécommunication et sans licence, le module de détermination (510) comprenant :
une première unité de détermination (511), configurée pour déterminer une bande de fréquences cible candidate parmi les au moins deux bandes de fréquences sur la base du type d'informations des informations à envoyer et de la correspondance entre le type d'informations et la bande de fréquences ; et
une deuxième unité de détermination (512), configurée pour déterminer une bande de fréquences cible à partir de la bande de fréquences cible candidate sur la base d'un degré d'urgence des informations à envoyer ;
le type d'informations comprenant un type commande, un type surveillance ou un type comptage ;
le module de détermination (510) étant plus particulièrement configuré pour :
déterminer la bande de fréquences sous licence dédiée comme la bande de fréquences cible pour les informations à envoyer si le type d'informations des informations à envoyer est le type commande ;
déterminer la bande de fréquences sous licence dédiée, la bande de fréquences sans licence ou la bande de fréquences sous licence non dédiée comme la bande de fréquences cible pour les informations à envoyer si le type d'informations des informations à envoyer est le type surveillance ; ou
déterminer la bande de fréquences sans licence ou la bande de fréquences sous licence non dédiée comme la bande de fréquences cible pour les informations à envoyer si le type d'informations des informations à envoyer est le type comptage ;
lorsque le type d'informations des informations à envoyer est le type surveillance et la bande de fréquences sous licence dédiée, la bande de fréquences sans licence ou la bande de fréquences sous licence non dédiée est déterminée comme la bande de fréquences cible pour les informations à envoyer, le module de détermination (510) étant plus particulièrement configuré pour :
déterminer la bande de fréquences sans licence comme la bande de fréquences cible pour les informations à envoyer si le type d'informations des informations à envoyer est le type surveillance et le degré d'urgence des informations à envoyer satisfait à une première condition prédéfinie ;
déterminer la bande de fréquences sous licence non dédiée comme la bande de fréquences cible pour les informations à envoyer si le type d'informations des informations à envoyer est le type surveillance et le degré d'urgence des informations à envoyer satisfait à une deuxième condition prédéfinie ; ou
déterminer la bande de fréquences sous licence dédiée comme la bande de fréquences cible pour les informations à envoyer si le type d'informations des informations à envoyer est le type surveillance et le degré d'urgence des informations à envoyer satisfait à une troisième condition prédéfinie,
un degré d'urgence correspondant à la troisième condition prédéfinie étant plus élevé qu'un degré d'urgence correspondant à la première condition prédéfinie et qu'un degré d'urgence correspondant à la deuxième condition prédéfinie.

4. Appareil (500) selon la revendication 3, dans lequel les au moins deux bandes de fréquences comprennent au moins deux bandes de fréquences parmi une bande de fréquences sous licence dédiée, une bande de fréquences sous licence non dédiée et une bande de fréquences sans licence qui sont utilisées par le système de communication d'énergie (900).

5. Dispositif (700) de transmission d'informations dans un système de communication d'énergie (900), le dispositif (700) s'appliquant à un système de communication d'énergie (900) qui utilise au moins deux bandes de fréquences pour la communication sans fil, des états d'attribution de licence de bande de fréquences des au moins deux bandes de fréquences étant différents, et le dispositif (700) comprenant :
un appareil (500) selon la revendication 3,
le module de détermination (510) comprenant :
un processeur (710) et une mémoire (720) connectée au processeur (710),
le processeur (710) appelant une instruction enregistrée dans la mémoire (720) dans le but de déterminer une bande de fréquences cible parmi les au moins deux bandes de fréquences sur la base d'un type d'informations d'informations à envoyer et d'une correspondance entre le type d'informations et la bande de fréquences ; et
le module d'envoi (520) comprenant :
un émetteur, configuré pour envoyer les informations à envoyer au moyen de la bande de fréquences cible.

6. Dispositif (700) selon la revendication 5, dans lequel le processeur (710) appelle une instruction enregistrée dans la mémoire (720) dans le but particulier de : déterminer une bande de fréquences cible candidate parmi les au moins deux bandes de fréquences sur la base du type d'informations des informations à envoyer et de la correspondance entre le type d'informations et la bande de fréquences ; et déterminer une bande de fréquences cible à partir de la bande de fréquences cible candidate sur la base d'un degré d'urgence des informations à envoyer.

7. Dispositif (700) selon la revendication 5 ou 6, dans lequel les au moins deux bandes de fréquences comprennent au moins deux bandes de fréquences parmi une bande de fréquences sous licence dédiée, une bande de fréquences sous licence non dédiée et une bande de fréquences sans licence qui sont utilisées par le système de communication d'énergie (900).

8. Dispositif (700) selon l'une quelconque des revendications 5 à 7, dans lequel le type d'informations comprend un type commande, un type surveillance ou un type comptage.

9. Dispositif (700) selon la revendication 8, dans lequel le processeur (710) appelle une instruction enregistrée dans la mémoire (720), dans le but particulier de :
déterminer la bande de fréquences sous licence dédiée comme la bande de fréquences cible pour les informations à envoyer si le type d'informations des informations à envoyer est le type commande ;
déterminer la bande de fréquences sous licence dédiée, la bande de fréquences sans licence ou la bande de fréquences sous licence non dédiée comme la bande de fréquences cible pour les informations à envoyer si le type d'informations des informations à envoyer est le type surveillance ; ou
déterminer la bande de fréquences sans licence ou la bande de fréquences sous licence non dédiée comme la bande de fréquences cible pour les informations à envoyer si le type d'informations des informations à envoyer est le type comptage.

10. Dispositif (700) selon la revendication 9, dans lequel, lorsque le type d'informations des informations à envoyer est le type surveillance et la bande de fréquences sous licence dédiée, la bande de fréquences sans licence ou la bande de fréquences sous licence non dédiée est déterminée comme la bande de fréquences cible pour les informations à envoyer, le processeur (710) appelle une instruction enregistrée dans la mémoire (720) dans le but de :
déterminer la bande de fréquences sans licence comme la bande de fréquences cible pour les informations à envoyer si le type d'informations des informations à envoyer est le type surveillance et le degré d'urgence des informations à envoyer satisfait à une première condition prédéfinie ;
déterminer la bande de fréquences sous licence non dédiée comme la bande de fréquences cible pour les informations à envoyer si le type d'informations des informations à envoyer est le type surveillance et le degré d'urgence des informations à envoyer satisfait à une deuxième condition prédéfinie ; ou
déterminer la bande de fréquences sous licence dédiée comme la bande de fréquences cible pour les informations à envoyer si le type d'informations des informations à envoyer est le type surveillance et le degré d'urgence des informations à envoyer satisfait à une troisième condition prédéfinie,
un degré d'urgence correspondant à la troisième condition prédéfinie étant plus élevé qu'un degré d'urgence correspondant à la première condition prédéfinie et qu'un degré d'urgence correspondant à la deuxième condition prédéfinie.

11. Système de communication d'énergie (900), le système de communication d'énergie (900) utilisant au moins deux bandes de fréquences pour la communication sans fil, des états d'attribution de licence de bande de fréquences des au moins deux bandes de fréquences étant différents,
le système de communication d'énergie (900) comprenant une pluralité de dispositifs de communication (700) selon la revendication 5, et la pluralité de dispositifs de communication (700) réalisant une communication d'énergie en envoyant et en recevant des informations, une correspondance existant entre un type d'informations des informations envoyées par le dispositif de communication (700) et la bande de fréquences et, lors de la réalisation de la communication d'énergie, le dispositif de communication (700) envoyant les informations au moyen d'une bande de fréquences correspondant au type d'informations des informations.

12. Système de communication d'énergie (900) selon la revendication 11, dans lequel, lorsque le dispositif de communication (700) envoie les informations au moyen de la bande de fréquences correspondant au type d'informations des informations, le procédé comprend en outre :
lorsque le type d'informations des informations correspond à au moins deux bandes de fréquences, la détermination d'une bande de fréquences cible parmi les au moins deux bandes de fréquences sur la base d'un degré d'urgence des informations, et l'envoi des informations au moyen de la bande de fréquences cible.

13. Système de communication d'énergie (900) selon la revendication 11 ou 12, dans lequel les au moins deux bandes de fréquences comprennent au moins deux bandes de fréquences parmi une bande de fréquences sous licence dédiée, une bande de fréquences sous licence non dédiée et une bande de fréquences sans licence qui sont utilisées par le système de communication d'énergie (900) ;
le type d'informations comprend un type commande, un type surveillance ou un type comptage ; et
lors de la réalisation de la communication d'énergie, l'envoi, par le dispositif de communication (700), des informations au moyen d'une bande de fréquences correspondant au type d'informations des informations comprend plus particulièrement :
l'envoi, par le dispositif de communication (700), des informations au moyen de la bande de fréquences sous licence dédiée si le type d'informations des informations est le type commande ;
l'envoi, par le dispositif de communication (700), des informations au moyen de la bande de fréquences sous licence dédiée, de la bande de fréquences sans licence ou de la bande de fréquences sous licence non dédiée si le type d'informations des informations est le type surveillance ; ou
l'envoi, par le dispositif de communication (700), des informations au moyen de la bande de fréquences sans licence ou de la bande de fréquences sous licence non dédiée si le type d'informations des informations est le type comptage.

14. Système de communication d'énergie (900) selon la revendication 13, dans lequel l'envoi, par le dispositif de communication (700), des informations au moyen de la bande de fréquences sous licence dédiée, de la bande de fréquences sans licence ou de la bande de fréquences sous licence non dédiée si le type d'informations des informations est le type surveillance comprend plus particulièrement :
si le type d'informations des informations est le type surveillance et le degré d'urgence des informations satisfait à une première condition prédéfinie, la détermination de la bande de fréquences sans licence comme la bande de fréquences cible pour les informations, et l'envoi des informations au moyen de la bande de fréquences cible ;
si le type d'informations des informations est le type surveillance et le degré d'urgence des informations satisfait à une deuxième condition prédéfinie, la détermination de la bande de fréquences sous licence non dédiée comme la bande de fréquences cible pour les informations, et l'envoi des informations au moyen de la bande de fréquences cible ; ou
si le type d'informations des informations est le type surveillance et le degré d'urgence des informations satisfait à une troisième condition prédéfinie, la détermination de la bande de fréquences sous licence dédiée comme la bande de fréquences cible pour les informations, et l'envoi des informations au moyen de la bande de fréquences cible,
un degré d'urgence correspondant à la troisième condition prédéfinie étant plus élevé qu'un degré d'urgence correspondant à la première condition prédéfinie et qu'un degré d'urgence correspondant à la deuxième condition prédéfinie.
